# EUROPEAN PATENT SPECIFICATION

(11) **EP 1 130 450 B1**
(45) Date of publication and mention of the grant of the patent: **13.09.2006**
(21) Application number: 99937074.5
(22) Date of filing: 13.08.1999
(51) Int. Cl.: G02B 27/28, H04N 9/31

(54) **POLARIZED LIGHT ILLUMINATOR AND PROJECTION DISPLAY**
BELEUCHTUNGSEINHEIT MIT POLARISIERTEM LICHT UND PROJEKTIONS-ANZEIGEVORRICHTUNG
ILLUMINATEUR A LUMIERE POLARISEE ET AFFICHAGE DE PROJECTION

(43) Date of publication of application: 05.09.2001
(73) Proprietor: SEIKO EPSON CORPORATION, Shinjuku-ku, Tokyo 163-0811 (JP)
(72) Inventor: Itoh, Yoshitaka, Suwa-Shi Nagano 392-8502 (JP)
(74) Representative: Sturt, Clifford Mark
(86) International application number: PCT/JP1999/004404
(87) International publication number: WO 2001/013161

(56) References cited:
- EP-A- 0 857 986
- EP-A- 0 938 014
- JP-A- 8 220 475
- JP-A- 11 030 767
- JP-A- 11 095 171

## Description

### Technical Field

The present invention relates to a polarized light illumination apparatus for uniformly illuminating a rectangular illumination area with light polarized in the same direction, and also to a projection type display device using such a polarized light illumination apparatus. More particularly, the present invention relates to a structure for synthesizing light rays emitted from two light sources such that the resultant synhthesized light ray is polarized in the same direction.

### Background Art

In liquid crystal display devices using a modulating element such as a liquid crystal element which modulates light polarized in a particular direction, only one component of two different polarized components emitted from a light source is used. To obtain a projected image with high brightness, it is required to increase the utilization efficiency of light.

However, when a projection type display device is constructed using a single light source, the utilization efficiency of light has a practical upper limit. Thus, one technique of projecting a high-brightness image is to increase the amount of light using a plurality of light sources.

However, if a plurality of light sources are arranged in a simple fashion, the overall area of the light source image becomes greater by a factor corresponding to the number of light sources. As a result, the angle of light (illumination angle) striking an illumination area also increases by a corresponding factor. This means that the amount of light per unit area is the same as that obtained with a single light source. In other words, the amount of light per unit area cannot be increased by using a plurality of light sources arranged in the above-described fashion.

Even when the amount of light can be increased by using a plurality of light sources, if only one polarization component of two polarization components of light emitted from the light sources is used, one-half of the total amount of light is wasted.

A polarized light illumination apparatus comprising the features of the preamble of claim 1 is disclosed in EP-A-0 857 986.

### Disclosure of Invention

It is an object of the present invention to provide a polarized light illumination apparatus including a plurality of light sources and capable of emitting a light ray using both polarized components without causing an increase in the illumination angle. It is another object of the present invention to provide a projection type display device capable of forming a projected image with extremely high brightness.

The present invention is defined by the appended claims.

### Brief Description of Drawings

Fig. 1 is a schematic diagram of an optical system constructed to serve as a polarized light illumination apparatus according to a first embodiment of the invention.
Fig. 2 is a schematic diagram illustrating the detailed structure of a polarized light separating optical element 201.
Fig. 3 is a schematic diagram illustrating the basic construction of the optical system constructed to serve as the polarized light illumination apparatus according to the first embodiment of the invention.
Fig. 4 is a perspective view of a condensing mirror plate used in the polarized light illumination apparatus shown in Fig. 1.
Fig. 5 is a schematic diagram illustrating a polarizing process in the polarized light illumination apparatus shown in Fig. 1.
Fig. 6 is a perspective view of a lens plate used in the polarized light illumination apparatus shown in Fig. 1.
Fig. 7 is a schematic diagram illustrating locations where secondary light source images are formed on the condensing lens plate of the polarized light illumination apparatus shown in Fig. 1.
Fig. 8 is a schematic diagram of an optical system constructed to serve as a polarized light illumination apparatus according to a second embodiment of the invention.
Fig. 9 is a schematic diagram illustrating the basic construction of an optical system constructed to serve as a polarized light illumination apparatus according to a third embodiment of the invention.
Fig. 10 is a schematic diagram illustrating the basic construction of an optical system constructed to serve as a polarized light illumination apparatus according to a fourth embodiment of the invention.
Fig. 11 is a perspective view of a condensing mirror plate according to a fifth embodiment, which can be employed in a polarized light illumination apparatus according to any of first to fourth embodiments.
Fig. 12 is a cross-sectional view, taken in an xz-plane, of an optical system of a projection type display device including the polarized light illumination optical system shown in Fig. 1 or 3.
Fig. 13 is a cross-sectional view, taken in a yz-plane, of the optical system of the projection type display device shown in Fig. 12.
Fig. 14 illustrates the emission spectra of light sources of the polarized light illumination apparatus.
Fig. 15 is a cross-sectional view, taken in an xz-plane, of another example of an optical system used in a projection type display device including the polarized light illumination optical system shown in Fig. 1 or 3.

### Best Mode for Carrying Out the Invention

Referring to the accompanying drawings, embodiments of the present invention are described below.

In the following description and the accompanying drawings, similar parts are denoted by similar reference numerals, and they are described only once to avoid duplicated descriptions. Three spatial axes orthogonal to one another are denoted by x, y, and z axes, respectively. Two opposite directions along the x axis are denoted by +x and -x directions, respectively. Similarly, two opposite directions along the y axis are denoted by +y and -y directions, respectively, and two opposite directions along the x axis are denoted by +z and -z directions, respectively. Furthermore, linearly polarized light having polarization axes parallel to the x, y, and z directions are referred to as x-polarized light, y-polarized light, and z-polarized light, respectively.

### [First Embodiment]

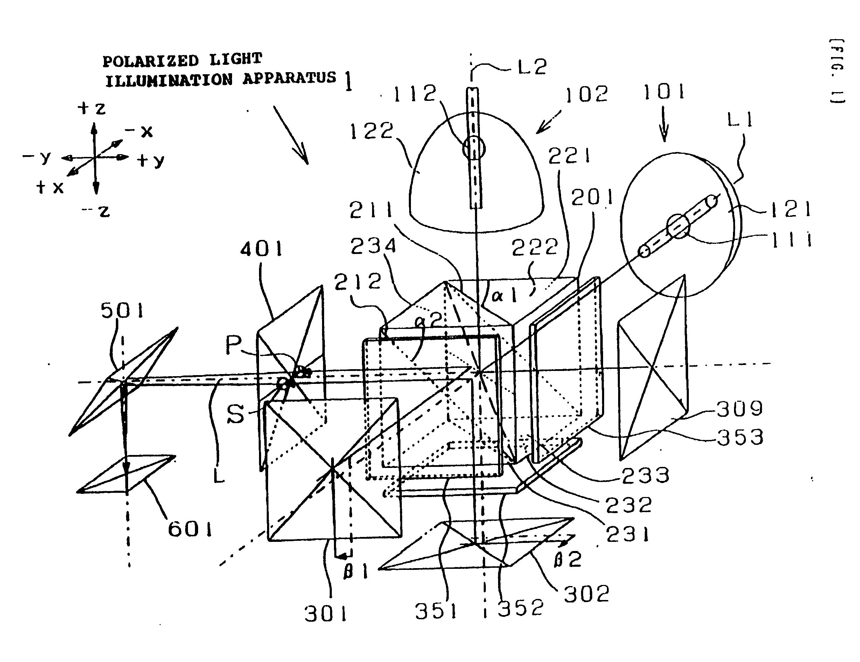

Fig. 1 is a perspective view of a first embodiment of a polarized light illumination apparatus according to the present invention. In this first embodiment, there are provided two light sources, that is, a first light source 101 and a second light source 102, for emitting light polarized in random directions (hereinafter, such light will be referred to as randomly polarized light).

As shown in Fig. 1, the polarized light illumination apparatus of the present embodiment includes: the first light source 101; a polarized light separating optical element 201; a first quarter-wave plate 351 (first polarization state converting optical element) and a third quarter-wave plate 353 (third polarization state converting optical element); a first condensing mirror plate 301 (first condensing and reflecting optical element) and a reflecting mirror 309 (reflecting optical element); a condensing lens unit 401 (condensing optical element, polarization converting optical element, and superimposing optical element); and a reflecting mirror 501 (optical path changing optical element), wherein these elements are disposed along the system optical axis L1 and L extending in the xy plane and intersecting each other at a right angle. Randomly polarized light emitted from the first light source 101 is first separated by the polarized light separating optical element 201 into two light rays polarized in different directions as will be described later, and then converted into a single light ray polarized in the same direction via the first quarter-wave plate 351, the first condensing mirror plate 301, the third quarter-wave plate 353, the reflecting mirror element 309, the polarized light separating optical element 201, the second light source 102, and the condensing lens unit 401. The resultant light ray is directed to a rectangular illumination area 601 via the reflecting mirror 501.

Furthermore, the second light source 102, the polarized light separating optical element 201, a second quarter-wave plate 352 (second polarization state converting optical element) and the third quarter-wave plate 353, a second condensing mirror plate 302 (second condensing and reflecting optical element) and the reflecting mirror element 309, the condensing lens unit 401, and the reflecting mirror 501 are disposed along the system optical axes L2 and L extending in the yz plane and intersecting each other at a right angle. Randomly polarized light emitted from the second light source 102 is first separated into two types of polarized light rays by the polarized light separating optical element 201 as will be described later and then passed through the second quarter-wave plate 352, the second condensing mirror plate 302, the third quarter-wave plate 353, the reflecting mirror element 309, the polarized light separating optical element 201, the first light source 101, and the condensing lens unit 401, thereby converting the two types of polarized light rays into a single light ray polarized in the same direction as the light ray emitted from the first light source 101. The resultant light ray also reaches the rectangular illumination area 601 via the reflecting mirror 501. Thus, the rectangular illumination area 601 is illuminated with one type of light ray polarized in substantially the same direction. The direction in which the light ray is directed after being reflected by the reflecting mirror 501 is substantially parallel to the plane in which the first and second light sources 101 and 102 are located.

The first and second light sources 101 and 102 consist mainly of light source lamps 111 and 112, respectively, and parabolic reflectors 121 and 122, respectively. Randomly polarized light rays emitted from the light source lamps 111 and 112 are reflected by the parabolic reflectors 121 and 122, respectively, in a single direction. As a result, the reflected light rays become substantially parallel and are incident on the polarized light separating optical element 201. Herein, the parabolic reflectors 121 and 122 may be replaced with reflectors of another type such as an ellipsoidal reflector, a spherical reflector, etc. However, in this case, it is desirable to dispose a collimating optical element on the incident side of the polarized light separating optical element 201 so that the light rays emitted from the first and second light sources 101 and 102 are collimated by the collimating optical element.

The polarized light separating optical element 201 is realized with a polarized beam splitter formed in a generally hexahedral shape including first and second polarized light separating films 211 and 212 made of a dielectric multilayer film disposed in a glass prism 202. The first polarized light separating film 211 is disposed at an angle to the direction in which light is emitted from the first light source 101 and also at an angle α1 = 45° to a first surface 221 of the polarized light separating optical element 201. Similarly, the second polarized light separating film 212 is disposed at an angle to the direction in which light is emitted from the second light source 102 and also at an angle α2 = 45° to a second surface 222 of the polarized light separating optical element 201.

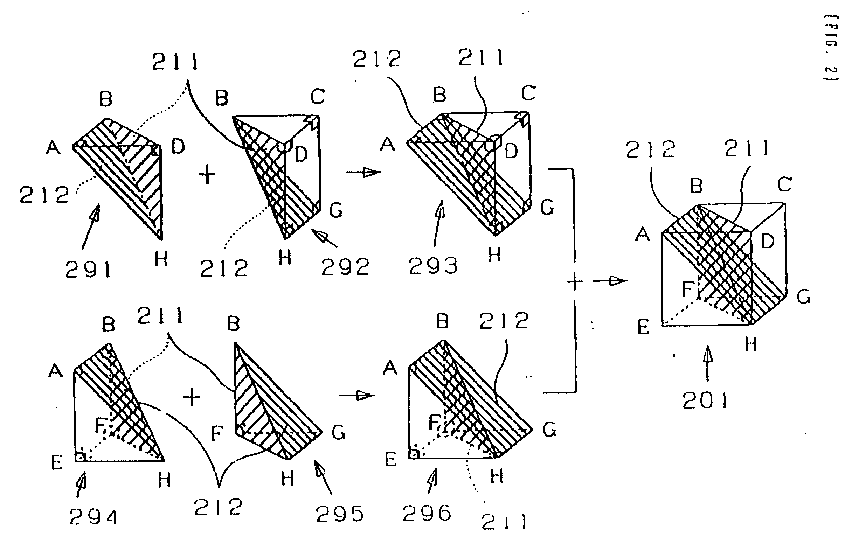

Fig. 2 illustrates the detailed structure of the polarized light separating optical element 201. As shown in Fig. 2, the polarized light separating optical element 201 consists of two triangular pyramid prisms 291 and 295 and two quadrangular pyramid prisms 292 and 294.

The first polarized light separating film 211 is disposed at the interface between a side face BDH of the first triangular pyramid prism 291 and a side face BDH of the first quadrangular pyramid prism 292 and also at the interface between a side face BFH of the second quadrangular pyramid prism 294 and a side face BFH of the second triangular pyramid prism 295. More specifically, the first polarized light separating film 211 may be formed by evaporating a dielectric multilayer film on either one of the side face BDH of the first triangular pyramid prism 291 or the side face BDH of the first quadrangular pyramid prism 292 and also on either one of the side face BFH of the second quadrangular pyramid prism 294 or the side face BFH of the second triangular pyramid prism 295. That is, either one of the side face BDH of the first triangular pyramid prism 291 or the side face BDH of the first quadrangular pyramid prism 292 may be employed as a surface on which the first polarized light separating film 211 is formed. Similarly, either one of the side face BFH of the second triangular pyramid prism 294 or the side face BFH of the second triangular pyramid prism 295 may be employed as a surface on which the first polarized light separating film 211 is formed. However, it is desirable that the first polarized light separating film 211 formed on the two prisms be flat. To meet this requirement, it is desirable to form the first polarized light separating film 211 on the side face BDH of the first triangular pyramid prism 291 and the side face BFH of the second quadrangular pyramid prism 294, or on the side face BDH of the first quadrangular pyramid prism 292 and the side face BFH of the second triangular pyramid prism 295.

Similarly, the second polarized light separating film 212 is disposed at the interface between a side face ABH of the first triangular pyramid prism 291 and a side face ABH of the second quadrangular pyramid prism 294 and also at the interface between a side face BGH of the first quadrangular pyramid prism 292 and a side face BGH of the second triangular pyramid prism 295. The second polarized light separating film 212 may be formed by evaporating a dielectric multilayer film on either one of the side face ABH of the first triangular pyramid prism 291 or the side face ABH of the second quadrangular pyramid prism 294 and also either one of the side face BGH of the first quadrangular pyramid prism 292 or the side face BGH of the second triangular pyramid prism 295. That is, either one of the side face ABH of the first triangular pyramid prism 291 or the side face ABH of the second quadrangular pyramid prism 294 may be employed as a surface on which the second polarized light separating film 212 is formed. Similarly, either one of the side face BGH of the first quadrangular pyramid prism 292 or the side face BGH of the second triangular pyramid prism 295 may be employed as a surface on which the second polarized light separating film 212 is formed. However, it is desirable that the second polarized light separating film 212 formed on the two prisms be flat. To meet this requirement, it is desirable to form the second polarized light separating film 212 on the side face ABH of the first triangular pyramid prism 291 and the side face BGH of the first quadrangular pyramid prism, or on the side face ABH of the second quadrangular pyramid prism 294 and the side face BGH of the second triangular pyramid prism 295.

The surface BDH of the first triangular pyramid prism 291 and the surface BDH, on which the first polarized light separating film 211 is formed, of the first quadrangular pyramid prism 292 are adhesively bonded to each other thereby forming a first prism assembly 293. Similarly, the surface BFH of the second quadrangular pyramid prism 294 and the surface BFH, on which the first polarized light separating film 211 is formed, of the second triangular pyramid prism 295 are adhesively bonded to each other thereby forming a second prism assembly 296. Finally, the two prism assemblies are combined together by adhesively bonding their surfaces ABGH to each other wherein the second polarized light separating film 212 is formed on one of the surfaces ABGH, thereby obtaining the polarized light separating optical element 201 in a complete form. The above-described procedure of assembling the four prisms is merely an example, and the four prisms may also be assembled according to a different procedure.

Referring again to Fig. 1, the first quarter-wave plate 351 is disposed at the side of the third surface 231 of the polarized light separating optical element 201 such that the first quarter-wave plate 351 opposes the third surface 231. Furthermore, the first condensing mirror plate 301 is disposed at the back of the quarter-wave plate 351. In this embodiment, the first quarter-wave plate 351 and the first condensing mirror plate 301 are substantially parallel to the third surface 231. On the side of a fourth surface 233 of the polarized light separating optical element 201, the third quarter-wave plate 353 is disposed at a location opposing the fourth surface 233 of the polarized light separating optical element 201, and the reflecting mirror element 309 is disposed at the back of the third quarter-wave plate 353. In this embodiment, the third quarter-wave plate 353 and the reflecting mirror element 309 are disposed such that they become substantially parallel to the fourth surface 233. On the side of a fifth surface 232 of the polarized light separating optical element 201, the second quarter-wave plate 352 is disposed at a location opposing the fifth surface 232 of the polarized light separating optical element 201, and the second condensing mirror plate 302 is disposed at the back of the second quarter-wave plate 352. In this embodiment, the second quarter-wave plate 352 and the second condensing mirror plate 302 are disposed such that they become substantially parallel to the fifth surface 232. The structure of the first and second condensing mirror plates 301 and 302 will be described in detail later. In Fig. 1, for ease of a visual understanding, the first to third quarter-wave plates 351, 352, and 353 are spaced from the polarized light separating optical element 201. However, in practice, it is desirable that they be in intimate contact with the polarized light separating optical element 201.

At the side of a sixth surface 234 of the polarized light separating optical element 201, the condensing lens unit 401 including a condensing lens plate 411 (condensing optical element), a half-wave plate 421 (polarization converting optical element), and a superimposing lens 431 (superimposing optical element) is disposed such that it faces in a direction substantially perpendicular to the optical axis L of the system.

In the polarized light illumination apparatus 1 constructed in the above-described manner, randomly polarized light emitted from the first light source 101 is directed to the condensing lens unit 401 or to the second light source 102 via a process described below.

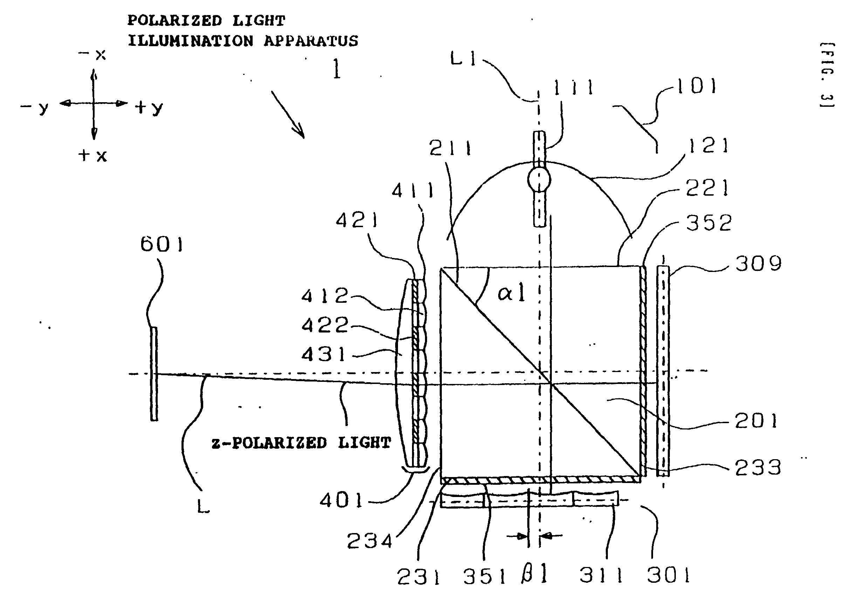

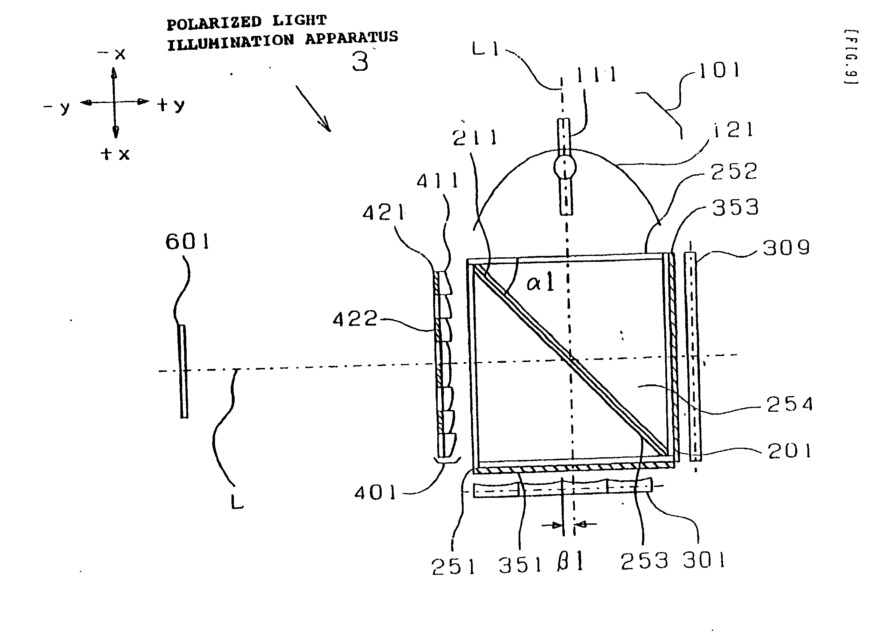

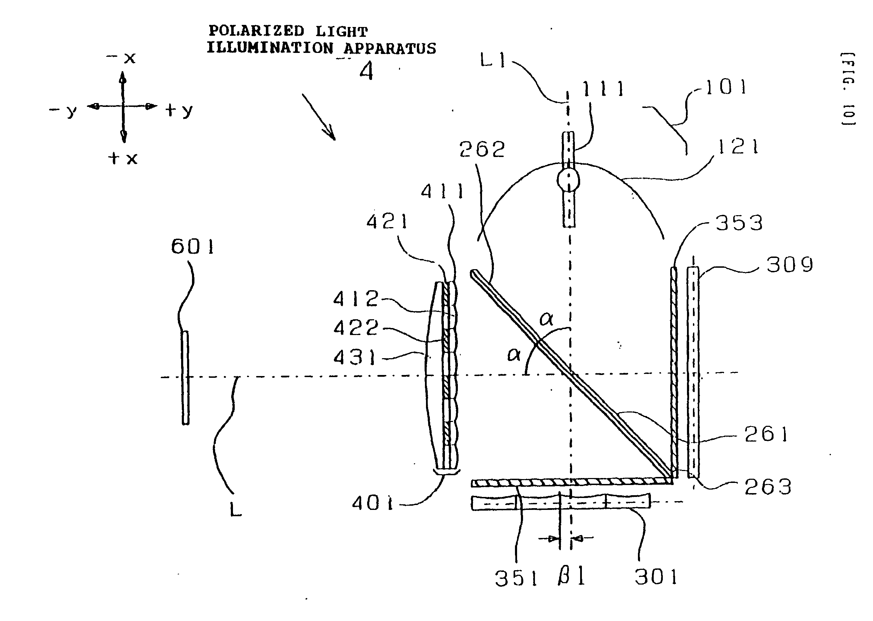

Fig. 3 is a cross-sectional view of Fig. 1, taken in the xy plane. Note that although not shown in Fig. 3, the second polarized light separating film 212 is formed in the polarized light separating optical element 201 such that it extends across the xy plane. The reflecting mirror 501 is not shown in Fig. 3, because it is not concerned with the present process. Thus, the optical path from the condensing lens unit 401 to the illumination area 601 is represented as being straight. Figs. 9 and 10 which will be described later are also drawn in a similar manner.

Randomly polarized light emitted from the first light source 101 can be regarded as mixed light of y-polarized light and z-polarized light. After being emitted from the first light source 101, if the mixed light is incident on the first surface 221 of the polarized light separating optical element 201, the mixed light is separated by the first polarized light separating film 211 into two types of polarized light rays, that is, a y-polarized light ray and a z-polarized light ray. More specifically, the y-polarized light contained in the randomly polarized light passes through the first polarized light separating film 211 and travels toward the third surface 231. On the other hand, the z-polarized light is reflected by the polarized light separating film 211 toward the fourth surface 233 of the polarized light separating optical element 201.

The two polarized light rays separated by the polarized light separating optical element 201 pass through the first and third quarter-wave plates 351 and 353, respectively, and then are reflected by the first condensing mirror plate 301 and the reflecting mirror element 309, respectively.

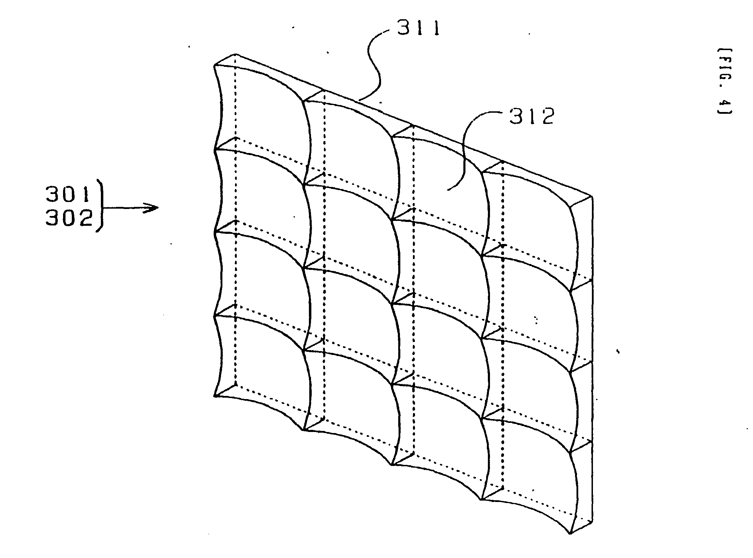

The first condensing mirror plate 301 includes, as shown in Fig. 4, a plurality of micro condensing mirrors 311 each having the same rectangular shape and arranged in a matrix fashion wherein each micro condensing mirror is geometrically similar to the illumination area 601. Reflecting surface 312 is formed on the surface of each micro condensing mirror 311 by depositing an aluminum film or a dielectric multilayer film. In this embodiment, the reflecting surface of each micro condensing mirror 311 is formed in a spherical shape. However, the reflecting surface 312 may also have another curvature. For example, a paraboloidal surface, an ellipsoidal surface, or a toric surface may also be employed depending on the characteristics of the incident light emitted from the first and second light sources 101 and 102. The second condensing mirror plate 302 which will be described later also has a similar structure. The reflecting mirror element 309 is a flat plane reflecting mirror of a widely used type. A reflecting surface 312 formed of an aluminum film or a dielectric multilayer film is disposed on the surface of the reflecting mirror element 309.

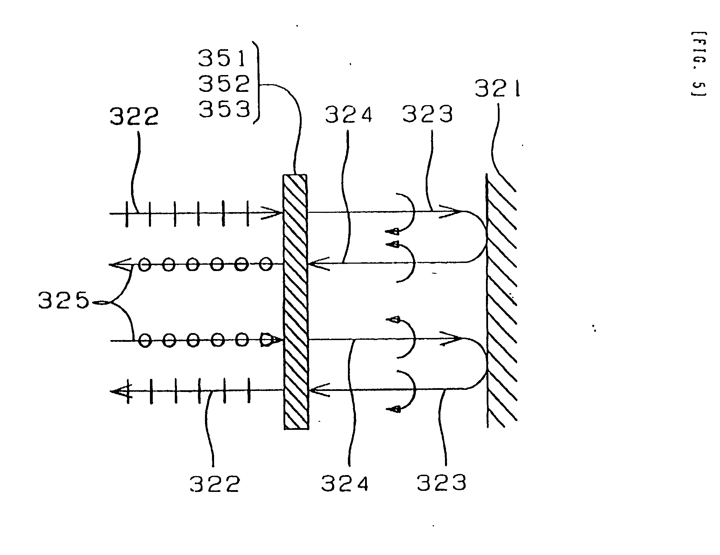

The y-polarized light ray and the z-polarized light ray separated by the first polarized light separating film 211 pass through the first and third quarter-wave plates 351 and 353, respectively, and then are reflected by the first condensing mirror plate 301 and the reflecting mirror element 309, respectively. When they again pass through the quarter-wave plates 351 and 353, the traveling direction of each polarized light ray is changed by substantially 180° and the polarization direction is rotated by substantially 90°. This process is described in further detail below with reference to Fig. 5. Note that, for simplicity of illustration, the condensing mirror plate 301 is represented as if it were formed in a flat-plate shape. The y-polarized light ray 322 incident on the quarter-wave plate 351 is converted by the quarter-wave plate 351 to a clockwise-rotating circularly polarized light ray 323 (note that the y-polarized light ray 322 can be converted to a counterclockwise-rotating light ray depending on the manner in which the quarter-wave plate 351 is disposed). The resultant light ray 323 travels to the mirror plate 321. When the light is reflected by the mirror plate 321, the rotation direction of the polarization axis is changed. More specifically, a clockwise-rotating circularly polarized light ray is converted to a counterclockwise-rotating circularly polarized light ray (a counterclockwise-rotating circularly polarized light ray is converted to a clockwise-rotating circularly polarized light ray). Thus, the travelling direction of the light ray 323 is converted by the mirror plate 321 by substantially 180° and the light ray 323 becomes a counterclockwise-rotating circularly polarized light ray 324. The resultant light ray 324 again passes through the quarter-wave plates 351 and 353 and is converted to a z-polarized light ray 325 when it passes through these quarter-wave plates. On the other hand, the z-polarized light ray 325 incident on the quarter-wave plate is converted to a y-polarized light ray 322 via a similar process.

Referring again to Fig. 3, when the y-polarized light ray reaches the third surface 231, its travelling direction is converted by substantially 180° and its polarization is converted to z-polarization by the first quarter-wave plate 351 and the first condensing mirror plate 301. The resultant light ray is then reflected by the first polarized light separating film 211 toward the sixth surface 234. Herein, the z-polarized light ray is not affected by the second polarized light separating film 212 (not shown) because the second polarized light separating film 212 is located substantially perpendicular to the yz plane.

Because the first condensing mirror plate 301 includes micro condensing mirrors 311 each having the capability of condensing light, the travelling direction of the polarized light ray is reversed, and as many condensed images are formed as there are micro condensing mirrors 311 forming the condensing mirror plate 301. These condensed images are images of the light source. Thus, hereinafter, the condensed images will be referred to as secondary light source images. In the present embodiment, the condensing lens unit 401 is disposed at a location where the secondary light source images are formed. That is, the z-polarized light ray transmitted through the sixth surface forms a plurality of secondary light source images at particular locations on the condensing lens unit 401.

The first condensing mirror plate 301 is disposed such that the first condensing mirror plate 301 is shifted in parallel in the -y direction until the center of the first condensing mirror plate 301 is apart from the x axis by β1. As a result, the z-polarized light ray reflected by the micro condensing mirrors 311 of the first condensing mirror plate 301 is incident on the condensing lens unit 401 in such a manner that the center axis of the z-polarized light ray is shifted in the -x direction from the optical axis L of the system, and thus the z-polarized light ray strikes a point P on the condensing lens unit 401 (refer to Fig. 1). That is, the plurality of secondary light source images are formed on the condensing lens unit 401, at locations slightly shifted in the -x direction, by the z-polarized light ray via the first condensing mirror plate 301. In this embodiment, the amount of shifting is equal to the absolute value of β1.

On the other hand, the z-polarized light ray which has reached the fourth surface 233 is converted in terms of the travelling direction by substantially 180° and in terms of the polarization into y-polarization by the third quarter-wave plate 353 and the reflecting mirror element 309. The resultant y-polarized light ray returns to the polarized light separating optical element 201. Herein, because the second polarized light separating film 212 (not shown) is disposed substantially perpendicular to the yz plane, the y-polarized light ray is reflected by the second polarized light separating film 212 toward the second light source 102 (not shown). The reflecting mirror element 309 is disposed such that its center is located substantially on the y axis.

As described above with reference to Fig. 3, the y-polarized light ray contained in the randomly polarized light ray emitted from the first light source 101 is converted to a z-polarized light ray and incident on the condensing lens unit 401. On the other hand, the z-polarized light ray contained in the randomly polarized light ray emitted from the first light source 101 is converted to a y-polarized light ray and incident on the second light source 102 (not shown).

Referring now to Fig. 1, the process is described below via which the randomly polarized light ray emitted from the second light source 102 is directed to the condensing lens 401 or to the first light source 101. The randomly polarized light ray emitted from the second light source 102 is separated into an x-polarized light ray and a y-polarized light ray via a process similar in principle to that via which the randomly polarized light ray emitted from the first light source 101 is separated. After that, the y-polarized light ray is converted to an x-polarized light ray and incident on the condensing lens unit 401. On the other hand, the x-polarized light ray is converted to a z-polarized light ray and incident on the first light source 101. That is, the y-polarized light ray contained in the randomly polarized light ray emitted from the second light source 102 passes through the second polarized light separating film 212 of the polarized light separating optical element 201 and travels toward the fifth surface 232. On the other hand, the x-polarized light ray contained in the randomly polarized light ray emitted from the second light source 102 is reflected by the second polarized light separating film 212 toward the fourth surface 233. The y-polarized light ray and the x-polarized light ray separated from the randomly polarized light ray pass through the second and third quarter-wave plates 352 and 353, respectively, and then reflected by the second condensing mirror plate 302 and the reflecting mirror element 309, respectively. After that, they again pass through the quarter-wave plates 352 and 353, respectively. The y-polarized light ray which has reached the fifth surface 232 is converted in terms of the travelling direction by substantially 180° and in terms of the polarization into x-polarization by the second quarter-wave plate 352 and the second reflecting mirror element 302. The resultant x-polarized light ray is then reflected by the second polarized light separating film 212 toward the sixth surface 234. Herein, the x-polarized light ray is not affected by the first polarized light separating film 211 because the first polarized light separating film 212 is located substantially perpendicular to the xy plane.

On the other hand, the x-polarized light ray which has reached the fourth surface 233 is converted in terms of the travelling direction by substantially 180° and in terms of the polarization into z-polarization by the third quarter-wave plate 353 and the reflecting mirror element 309. The resultant z-polarized light ray is again reflected by the first polarized light separating film 211 toward the first light source 101.

Like the first condensing mirror plate 301, the second condensing mirror plate 302 also includes micro condensing mirrors 311 each having the capability of condensing light and is disposed such that the second condensing mirror plate 302 is shifted in parallel in the +x direction until the center of the second condensing mirror plate 302 is apart from the z axis by β2. As a result, the x-polarized light ray reflected by the micro condensing mirrors 311 of the second condensing mirror plate 302 is incident on the condensing lens unit 401 in such a manner that the center axis of the x-polarized light ray is shifted in the +x direction from the optical axis L of the system, and thus the x-polarized light ray strikes a point S on the condensing lens unit 401 (refer to Fig. 1). That is, a plurality of secondary light source images are formed on the condensing lens unit 401, at locations slightly shifted in the +x direction, by the x-polarized light ray via the second condensing mirror plate 302. In this embodiment, the amount of shifting is equal to the absolute value of β2.

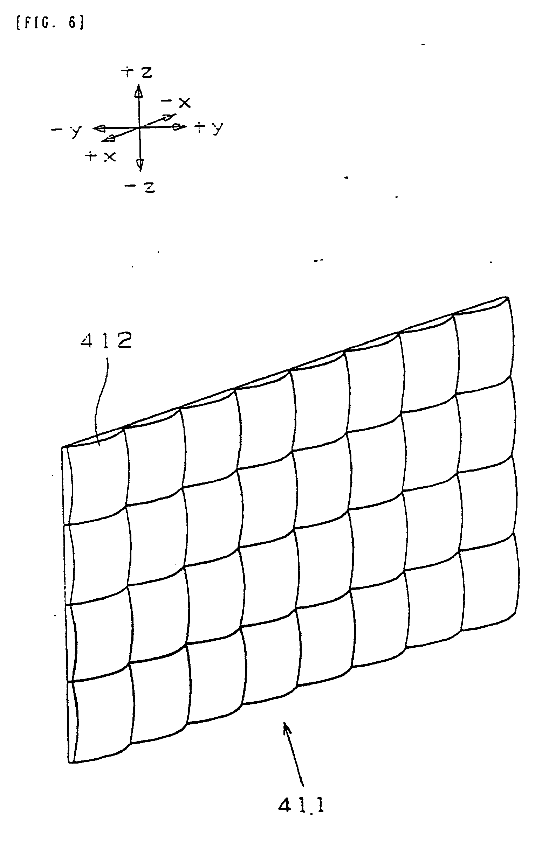

Fig. 6 illustrates the appearance of the condensing lens plate 411 of the condensing lens unit 401. As shown in Fig. 6, the condensing lens plate 411 includes a plurality of rectangular-shaped micro lenses 412. Herein, the number of rectangular-shaped micro lenses 412 is equal to or twice the number of micro condensing mirrors 311 forming the first and the second condensing mirror plates 301 and 302. In the case where the number of micro condensing mirrors 311 of the first condensing mirror plate 301 is different from that of the second condensing mirror plate 302, the number of micro condensing mirrors 311 may be adjusted on the basis of the number of micro condensing mirrors of the condensing mirror plate having the greatest number of micro condensing mirrors. In the present embodiment, the condensing lens plates 411 includes twice as many micro lenses 412 as the number of micro condensing mirrors 311 forming the first condensing mirror plate 301. In order that the polarized light rays from the first and second light sources 101 and 102 are focused at different spatial points, as will be described later, the micro lenses 412 are disposed at locations corresponding to the focusing points of the respective polarized light rays. More specifically, in the present embodiment, the number of micro lenses 412 disposed in each line along the x direction is twice the number of micro condensing mirrors 311 forming the first condensing mirror plate 301 (second condensing mirror plate 302) so that the secondary light source images formed by the light ray from the first light source 101 are slightly shifted in the x direction from the secondary light source images formed by the light ray from the second light source 102 without having overlapping among them.

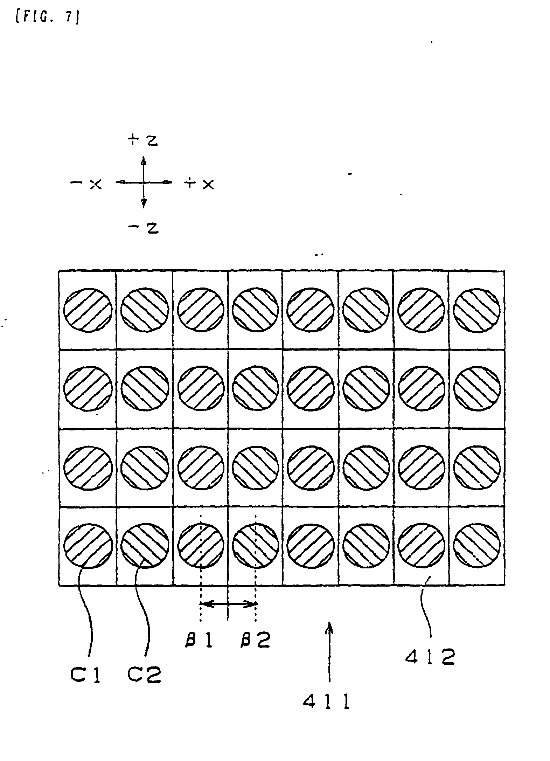

As shown in Fig. 7, when the condensing lens plate 411 is viewed from the side of the illumination area 601, the secondary light source images C1 (circular images shaded with lines diagonally extending from the left and bottom to the right and top) formed by the z-polarized light ray correspond to the micro lenses 412 in a such a way that each secondary light source image C1 in the z direction has its corresponding micro lens 412 whereas every other secondary light source image C1 in the x direction has its corresponding micro lens 412. Furthermore, when the condensing lens plate 411 is viewed from the side of the illumination area 601, the secondary light source images C2 (circular images shaded with lines diagonally extending from the right and bottom to the left and top) formed by the x-polarized light ray correspond to the micro lenses 412 in a such a way that each secondary light source image C2 in the z direction has its corresponding micro lens 412 whereas every other secondary light source image C2 in the x direction has its corresponding micro lens 412. Thus, as described above, the secondary light source images C1 formed by the polarized light ray from the first light source 101 and the secondary light source images C2 formed by the polarized light from the second light source 102 are alternately located in the x direction. Such an arrangement is achieved, as described earlier, because the first condensing mirror plate 301 is located such that the center of the condensing mirror plate 301 is shifted in parallel by β1 in the -y direction from the x axis and the second condensing mirror plate 302 is located such that the center of the condensing mirror plate 302 is shifted in parallel by β2 in the +x direction from the z axis. In this embodiment, because the number of micro lenses 412 of the condensing lens unit 401 is set to twice the number of micro condensing mirrors 311 of the first condensing mirror plate 301 (and of the second condensing mirror plate 302), β1 and β2 are set to one-half the length of one micro lens 412 measured in the x direction. In the case where the number of micro lenses 412 of the condensing lens unit 401 is set to be equal to the number of micro condensing mirrors 311 of the first condensing mirror plate 301 (and of the second condensing mirror plate 302), β1 and β2 are preferably set to one-quarter the length of one micro lens 412 measured in the x direction.

With the structure described above, the z-polarized light ray which reaches the condensing lens unit 401 via the first condensing mirror plate 301 after being emitted from the first light source 101 is substantially parallel, in terms of the main light ray, to the x-polarized light ray which reaches the condensing lens unit 401 via the second condensing mirror plate 302, wherein the z-polarized light ray and the x-polarized light ray are incident on the condensing lens unit 401 without producing overlapping with each other such that these two light rays form secondary light source images at different spatial locations.

On the surface, on the side of the illumination area 601, of the condensing lens plate 411 of the condensing lens unit 401, there is provided a half-wave plate 421 including a retardation layer 422 selectively formed at locations corresponding to the locations of the secondary light source images C1 formed by the z-polarized light ray. When the z-polarized light ray passes through the retardation layer 422, the polarization axis is rotated such that the z-polarized light ray is converted to an x-polarized light ray. On the other hand, no retardation layer 422 is formed in the optical path associated with the x-polarized light ray so that the x-polarized light ray passes through the half-wavelength retardation plate 421 without undergoing rotation of the polarization axis and while maintaining the state of polarization in the x-polarization. As a result, almost all light rays becomes an x-polarized light ray after being passed through the condensing lens unit 401.

The light rays whose polarization is aligned into the x direction via the above-described process are superimposed by the superimposing lens 431 disposed on the side, facing the illumination area 601, of the half-wave plate 421, upon one another at a single location in the illumination area 601. In this process, as shown in Fig. 1 (but now shown in Fig. 3), after the travelling direction of the illumination light is bent by substantially 90° by the reflecting mirror 501 disposed between the superimposing lens 431 and the illumination area 601, the illumination light reaches the illumination area 601. More specifically, the plurality of images formed by the micro condensing mirrors of the first and second condensing mirror plates 301 and 302 are superimposed by the condensing lens plate 411 and the superimposing lens 431 into a single image at the same location, and the state of polarization becomes the same when the light ray passes through the half-wave plate 421. Thus, almost all light rays finally reaches the illumination area 601. Because the illumination area 601 is illuminated with the plurality of secondary light source images, the variation in the illumination intensity is very small. That is, all illumination area is uniformly illuminated with the light ray polarized in substantially the same direction.

The part of the light ray emitted from the first light source 101 which is incident as the x-polarized light ray on the second light source 102 after being passed through the polarized light separating optical element 201 and the part of the light ray emitted from the second light source 102 which is incident as the z-polarized light ray on the first light source 101 after being passed through the polarized light separating optical element 201 are both reflected by the reflectors 121 and 122 of the respective light sources and then again output from the respective light sources. However, when the light rays are reflected by the reflectors, the polarization axis is rotated. As a result, a part of each light ray becomes a polarized light ray which is allowed to pass through the first or second polarized light separating film 211 or 212, and is incident on the first condensing mirror plate 301 or the second condensing mirror plate 302. As a result, the polarized light rays incident on the first and second light sources 101 and 102, respectively, are eventually incident on the condensing lens unit 401 and thus they are used in a highly efficient fashion.

In the polarized light illumination apparatus 1 of the present embodiment, as described above, the randomly polarized light rays emitted from the first and second light sources 101 and 102 are first separated by the polarized light separating optical element 201 into two different types of polarized light rays, and then the two types of polarized light rays are introduced into predetermined parts of the half-wave plate 421 so that the z-polarized light ray is converted to an x-polarized light ray. Thus, the randomly polarized light rays emitted from the first and second light sources 101 and 102 are converted into a single type polarized light ray without producing substantially any loss, whereby the illumination area 601 is illuminated brightly. Even though two light sources 101 and 102 are used, the illumination light rays emitted from the two light sources 101 and 102 can be combined together without causing an increase in the incident angle (illumination angle) of the illumination light rays to the illumination area. This means that the illumination light ray has the same cross section as obtained when only one light source is used. Therefore, it is possible to increase the amount of light per unit area to a level approximately twice that obtained with a single light source. Furthermore, the two light sources, that is, the first and second light sources 101 and 102 can both be disposed in the xz plane. In this case, the reflecting mirror 501 is disposed such that the travelling direction of the illumination light ray emitted through the condensing lens unit 401 is changed by the reflecting mirror 501 so that the illumination light ray is emitted in a direction parallel to the xz plane in which the two light sources are disposed. This allows the illumination apparatus to be formed in a small shape in height or depth. That is, the reflecting mirror 501 disposed at the stage following the condensing lens unit 401 makes it possible to design the polarized light illumination apparatus with a small size in a more flexible fashion.

To introduce the two types of polarized light rays into the predetermined parts of the half-wavelength retardation plate 421, the polarized light separating optical element 201 is required to have high polarized light separation performance. In the present embodiment, to meet the above requirement, polarized light separating optical element 201 is formed using a glass prism and a dielectric multilayer film so that it is thermally stable in the polarized light separation performance. Thus, even when this polarized light separating optical element 201 is used in an illumination apparatus required to output a high optical power, the polarized light separating optical element 201 can provide stable polarized light separation performance. Therefore, it is possible to realize a polarized light illumination apparatus having desired high performance.

Furthermore, in the present embodiment, the micro condensing mirrors 311 of the first and second condensing mirror plates 301 and 302 are formed in a rectangular shape longer in the horizontal direction than in the vertical direction to fit the rectangular shape of the illumination area 601 (that is, the micro condensing mirrors are formed to have a substantially similar shape to that of the illumination area), and the direction in which the two types polarized light rays emitted from the polarized light separating optical element 201 are separated (that is, the direction in which the secondary light source images formed by the two types polarized light rays are aligned) is set to be horizontal (in the x direction) to fit the shape of the illumination area 601. This makes it possible to achieve a high illumination efficiency without wasting light even when the illumination area 601 has a rectangular shape longer in the horizontal direction than in the vertical direction.

Furthermore, the center axes of the polarized light rays which are incident on the condensing lens 401 via the first and second condensing mirror plates 301 and 302 are parallel to each other. This means that light rays reflected by the micro condensing mirrors of the first and second condensing mirror plates (condensing and reflecting optical element) are incident at substantially the same angle upon the polarized light separating optical element 201. Therefore, even when the polarized light separation characteristic of the polarized light separating optical element 201 is sensitive to the incident angle of light, polarized light ray separation can be accomplished in a highly reliable fashion and thus a uniform illumination light ray can be obtained.

The shifting amounts β1 and β2 of the first and second condensing mirror plates 301 and 302 from the x and z axes and the shifting directions thereof are not limited to those employed in the present embodiment. The shifting amounts β1 and β2 of the first and second condensing mirror plates 301 and 302 and the shifting directions thereof may be set in different manners as long as the secondary light source images produced by the y-polarized light rays contained in the light ray emitted from the first light source 101 and the secondary light source images produced by the y-polarized light rays contained in the light ray emitted from the second light source 102 are spatially separated from each other. For example, as opposed to the present embodiment, the first condensing mirror plate 301 may be shifted in the +y direction and the second condensing mirror plate 302 may be shifted in the -x direction. In this case, a z-polarized light ray emerges from the condensing lens unit 401.

In order that the z-polarized light ray contained in the light ray emitted from the first light source 101 and x-polarized light ray contained in the light ray emitted from the second light source 102 are incident on the opposite light sources in a highly efficient fashion, it is desirable that the reflecting mirror element 309 be constructed in the form of a flat-plate reflecting mirror whose center is located substantially on the center axis of the polarized light separating optical element 201.

Although in the present embodiment, the half-wave plate 421 is disposed on the surface, facing the illumination area, of the condensing lens plate 411, the half-wave plate 421 may also be disposed at any location which allows the secondary light source images to be properly formed. For example, the half-wave plate 421 may be disposed on the surface, facing the polarized light separating optical element, of the condensing lens plate 411.

Furthermore, if the micro lenses 412 of the condensing lens plate 411 are formed in a decentered fashion such that the light rays emerging from the respective micro lenses 412 are directed to the illumination area 601, then the condensing lens plate 411 also provides the function which is realized by the superimposing lens 431 in the present embodiment. Alternatively, the micro condensing mirrors 311 of the first and second condensing mirror plates 301 and 302 may be formed in a decentered fashion such that the light rays reflected by the micro condensing mirrors 311 are directed toward the illumination area 601. In this case, the first and second condensing mirror plates 301 and 302 also provide the function realized by the superimposing lens 431 in the above example. Thus, in these two cases, the superimposing lens 431 can be removed. This allows a reduction in the cost of the polarized light illumination apparatus. In the latter case, the distance between the secondary light source images formed by the z-polarized light rays and the secondary light source images formed by the z-polarized light rays, shown in Fig. 7, becomes smaller β1 + β2.

In the case where the light rays emitted from the first and second light sources 101 and 102 have a high degree of parallelism, the condensing lens plate 411 may be removed.

Furthermore, although the micro lenses 412 of the condensing lens plate 411 are formed in the shape of a rectangle longer in the horizontal direction than in the vertical direction, there is no particular limitation in the shape. However, because the secondary light source images C1 formed by the z-polarized light rays and the second light source images C2 formed by the x-polarized light rays are aligned in the horizontal direction as shown in Fig. 7, it is desirable that the shape of the micro lenses 412 of the condensing lens plate 411 be determined in accordance with the locations where the secondary light source images are formed.

Furthermore, two different types of retardation layers having different characteristics may be disposed at a location where the secondary light sources of the z-polarized light rays are formed and at a location where the secondary light sources of the x-polarized light rays are formed so that the light rays are aligned in terms of polarization into a single particular direction. Alternatively, the retardation layer 422 may be disposed at a location where the secondary light source images C2 associated with the x-polarized light rays are formed such that the illumination light ray becomes z-polarized.

### [Second Embodiment]

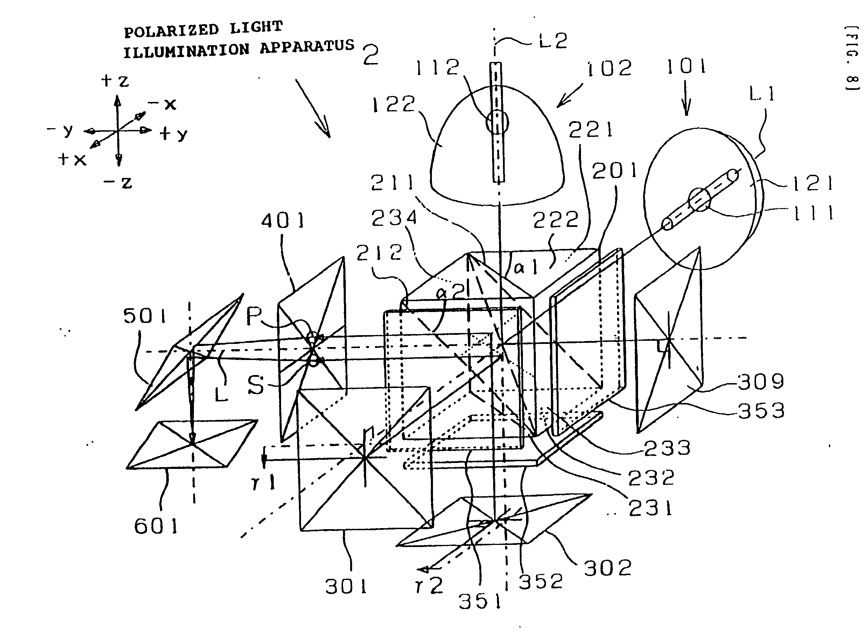

In the polarized light illumination apparatus 1 shown in Fig. 1, the first and second condensing mirror plates 301 and 302 are disposed so that the secondary light source images formed by the z-polarized light ray and the secondary light source images formed by the x-polarized light ray are aligned substantially in parallel along the x axis. Alternatively, as in a polarized light illumination apparatus 2 shown in Fig. 8, the first and second condensing mirror plates 301 and 302 may be disposed such that the secondary light source images formed by the z-polarized light ray and the secondary light source images formed by the x-polarized light ray are aligned substantially in parallel along the z axis. More specifically, for example, the first condensing mirror plate 301 is parallely shifted in the -z direction such that its center is apart from the x axis by γ1, and the second condensing mirror plate 302 is parallely shifted in the -y direction such that its center is apart from the z axis by γ2 (as shown in Fig. 8). Or the first condensing mirror plate 301 may be parallely shifted in the +z direction such that its center is apart from the x axis by γ1, and the second condensing mirror plate 302 may be parallely shifted in the +y direction such that its center is apart from the z axis by γ2. In the present embodiment, the secondary light source images are arranged in a manner different from the arrangement in the first embodiment described above. Therefore, it is required to change the manner in which the condensing lens plate 411 and the half-wave plate 421 of the condensing lens unit 401 are arranged in accordance with the arrangement of the secondary light source images. More specifically, the retardation layer 422 should be aligned in the z-direction. Also in this case, the basic principles of the polarized light illumination apparatus are similar to those of the polarized light illumination apparatus of the first embodiment, and thus they are not described in further detail.

### [Third Embodiment]

In the polarized light illumination apparatus 3 shown in Fig. 9 (illustrating a cross section taken along the xy plane), the respective optical systems are disposed in a substantially similar manner as in the first embodiment 1. However, a prism member 251 is formed of six transparent plates 252 serving as side walls, and a first polarized light separating plate 253 in a flat plate form on which a first polarized light separating film 211 and a second polarized light separating plate (not shown, and strictly speaking, there are two second polarized light separating plates separated by the first polarized light separating plate 253) in a flat plate form on which a second polarized light separating film (not shown) is formed are disposed in the inside of the prism member 251. Furthermore, the inside of the prism member 251 is filled with a liquid 254. The resultant prism member 251 is employed as the polarized light separating optical element 201. Herein, it is required that the transparent plates, the first and second polarized light separating plates, and the liquid should be substantially equal in refractive index. This structure allows a reduction in cost and a reduction in weight of the polarized light separating optical element 201.

In this polarized light illumination apparatus 3, as described earlier with reference to the first embodiment 1, the micro lenses of the condensing lens plate 411 of the condensing lens unit 401 are constructed in a decentered fashion so that the condensing lens plate 411 also serves as a superimposing lens thereby making it unnecessary to dispose a separate superimposing lens. This structure allows a reduction in cost and a reduction in weight of the polarized light illumination apparatus.

### [Fourth Embodiment]

In the polarized light illumination apparatus 4 shown in Fig. 10, although the respective optical systems are disposed in a similar manner as in the first embodiment 1, the polarized light separating optical element 201 is constructed in the form of a flat plate. More specifically, two polarized light separating plates 261 (strictly speaking, there are three polarized light separating plates 261 one polarized light separating plate is separated by the other polarized light separating plate) each consisting of a polarized light separating film 262 disposed between two glass substrates 263 are disposed at an angle α = 45° to the optical axes (L1, L) of the system thereby achieving substantially the same functions as achieved by the polarized light separating optical element 201 formed in a hexahedral shape (refer to Fig. 1). This structure allows a reduction in cost and a reduction in weight of the polarized light separating optical element 201. In the present embodiment, unlike the first to third embodiments, the polarized light separating optical element 201 does not actually have first to sixth surfaces, however, the polarized light separating optical element 201 has first to sixth virtual surfaces as represented by broken lines in Fig. 10. The first and second light sources 101 and 102, the first to third quarter-wave plates 351, 352, and 353, the first and second condensing mirrors 301 and 302, the reflecting mirror element 309, the condensing lens unit 401, and other elements are disposed at locations with respect to the first and sixth virtual surfaces in a similar manner as in the first to third embodiments.

### [Fifth Embodiment]

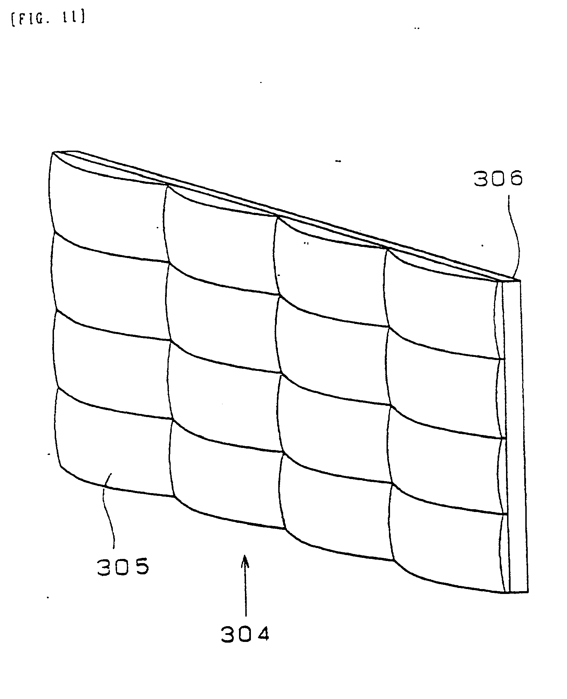

In the polarized illumination apparatus 1 to 4 described above, one of or both of the first and second condensing mirror plates 301 and 302 may be formed in the shape of a condensing mirror plate 304 shown in Fig. 11. Herein the condensing mirror plate 304 includes a plurality of micro lenses 305 and a reflecting mirror plate 306.

Furthermore, if each micro lens 305 is formed in a decentered fashion such that the light rays emerging from the respective micro lenses 305 are directed toward the illumination area 601, then the first and second condensing mirror plates 301 and 302 also provides a superimposing function similar to that of the superimposing lens 431. In this case, the superimposing lens 431 becomes unnecessary, and thus the polarized light illumination apparatus can be produced at lower cost.

### [Sixth Embodiment]

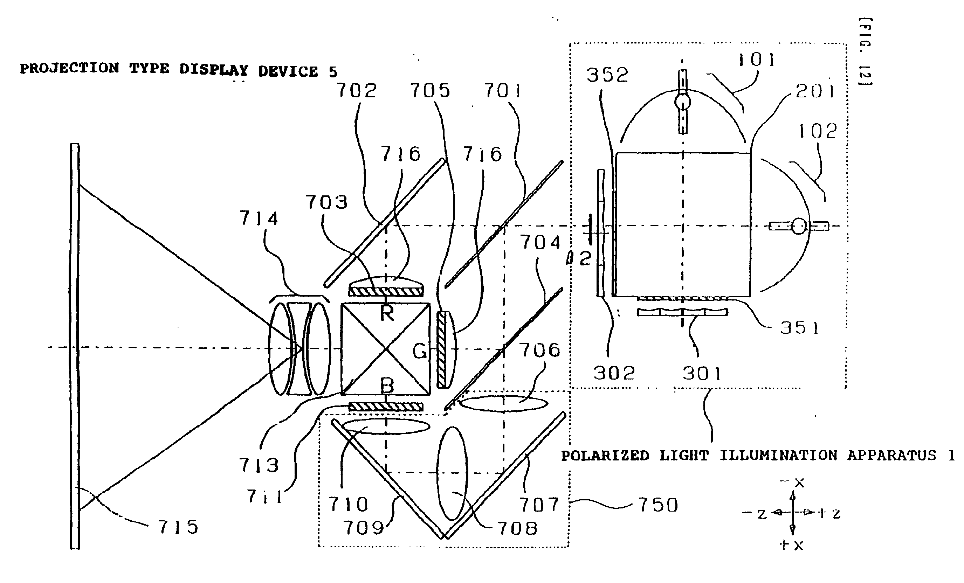

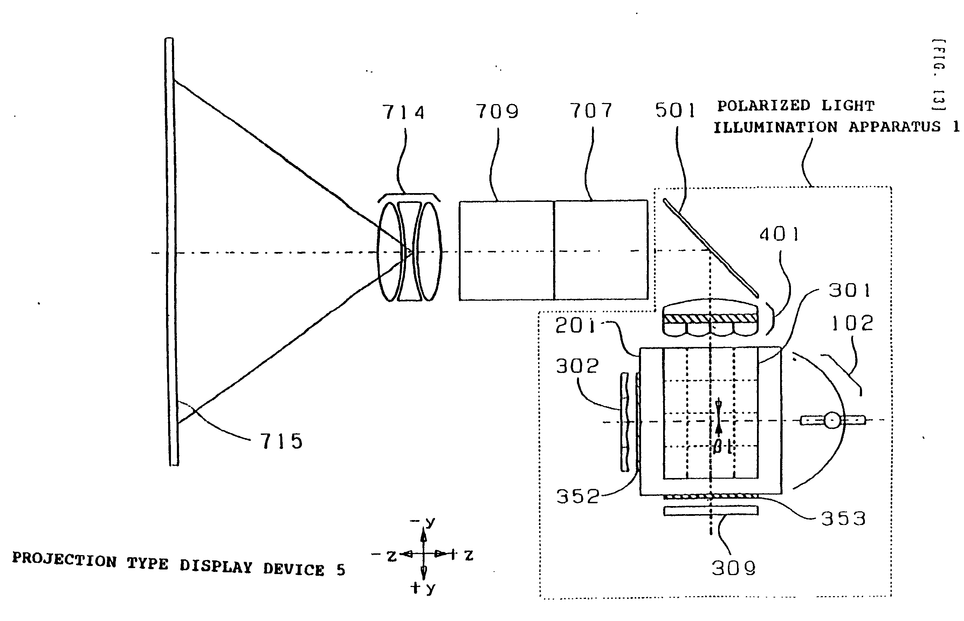

Of polarized light illumination apparatus disclosed in the first to fifth embodiments, the polarized light illumination apparatus 1 according to the first embodiment is employed herein in this sixth embodiment, by way of example, to construct a projection type display device having improved capability of forming a projected image with higher brightness, as shown in Figs. 12 and 13. In this projection type display device 5 of the present embodiment, a transmissive liquid crystal light valve is employed as an optical modulator, and two different types of light source lamps with different emission spectra are used in the two light sources of the polarized light illumination apparatus 1 wherein these light source lamps can be selectively turned on. Fig. 12 is a cross-sectional view of the projection type display device 5 taken along the xz plane, and Fig. 13 is a cross-sectional view of the projection type display device 5 taken along the yz plane. Although the apparatus includes a condensing lens unit 401 and a reflecting mirror 501 serving as an optical path changing optical element, they are not shown in Fig. 12.

Referring to Figs. 12 and 13, the polarized light illumination apparatus 1 disposed in the projection type display device 5 of the present embodiment includes a first light source 101 and a second light source 102 for emitting randomly polarized light rays in a single direction. The randomly polarized light rays emitted from these light sources are separated by a polarized light separating optical element 201 into two types of polarized light rays. Of the two types of polarized light rays, a z-polarized light ray is converted by a half-wave plate 421 of a condensing lens unit 401 into an x-polarized light ray. Thus, the light ray whose polarization is aligned into the same single direction (x direction) emerges from the condensing lens unit. The polarized light ray emerging from the condensing lens is reflected by a reflecting mirror 501 and directed in the -z direction. Thus, the polarized light ray is incident on a blue/green color reflecting dichroic mirror 701.

When the illumination light ray emitted from the polarized light illumination apparatus 1 is incident on the blue/green light reflecting dichroic mirror 701 (colored light separating optical element), a red light component is passed through the dichroic mirror 701, however, blue and green light components are reflected. The red light ray is then reflected by a reflecting mirror 702 and directed to a first liquid crystal light valve 703 via a collimator lens 716. Although not shown in Fig. 12, polarizers are disposed on the incident and emerging sides of the liquid crystal light valve. Of the blue and green light components, the green light component is reflected by a green light reflecting dichroic mirror 704 (colored light separating optical element) and directed to a second liquid crystal light valve 705 via a collimator lens 716. The collimator lenses 716 disposed on the incident sides of the first and second liquid crystal light valves 703 and 705 prevent the light ray striking the liquid crystal valves from diverging thereby achieving an improved illumination efficiency. The collimator lenses 716 also serve to effectively direct the light ray emerging from the liquid crystal light valves to a projection lens. On the incident side of a third liquid crystal light valve 711, there is provided an emerging lens 710 forming a light guiding means 750, as will be described in detail later. The emerging lens 710 also provides a function similar to that of the collimator lenses 716. However, these collimator lenses 716 may be removed.

The blue light ray has a long optical path compared with the other two color light rays, and the light guiding means 750 realized with a relay lens system including an incident lens 706, a relay lens 708, and an emerging lens 710 is disposed in the optical path. That is, the blue light ray is passed through the green light reflecting dichroic mirror 704 and directed to the relay lens 708 via the incident lens 706 and the reflecting mirror 707. The blue light ray is focused by the relay lens 708 and then reflected by the reflecting mirror 709 toward the emerging lens 710. Thus, the blue light ray reaches the third liquid crystal light valve 711.

The first to third liquid crystal light valves 703, 705, and 711 modulates the respective colored light rays so as to give image information associated with the respective colors to the corresponding colored light rays. The modulated colored light rays are incident on the cross dichroic prism 713 (colored light combining optical element). The cross dichroic prism 713 includes a red light reflecting dielectric multilayer film and a blue light reflecting dielectric multilayer film which are both disposed inside the cross dichroic prism 713 and which intersect each other in a cross-shaped fashion. The cross dichroic prism 713 synthesizes the modulated colored light rays into a single light ray. The resultant synthesized light ray is projected onto a screen 715 via a projection lens 714 (projecting optical system) thereby forming an image on the screen 715.

The liquid crystal light valves employed in this projection type display device 5 each serve to modulate one type of polarized light ray. Therefore, if a conventional illumination apparatus is used to illuminate the liquid crystal light valves with randomly polarized light, then one-half or a greater part (typically 60%) of the randomly polarized light will be absorbed by the polarizers and converted to heat. Thus, the efficiency in use of light is low and a large-size cooling system, which often generates large noise, is required to remove the heat from the polarizers. Such problems are solved in the projection type display device 5 of the present embodiment.

More specifically, in the projection type display device 5 of the present embodiment, the light ray emitted from the polarized light illumination apparatus 1 is aligned in terms of polarization in the same single direction by rotating the polarization axis of only a component polarized in a particular direction (for example in the z direction) via a half-wave plate 421 thereby converting the state of polarization of that component into the same state of polarization as that of the remaining component (polarized for example in the x direction) whereby the first to third liquid crystal light valves 703, 705, and 711 are all illuminated with the light ray polarized in the same single direction. As a result, the efficiency in use of light is improved and a bright image can be projected. Furthermore, because the absorption of light by the polarizers decreases, the temperature increase of the polarizers is suppressed. This allows a small-sized cooling system which generates low noise to be employed. Furthermore, using two light sources including the first and second light sources 101 and 102, a light ray whose polarization is aligned into the same single direction is emitted without causing a loss for any light ray emitted from the first and second light sources 101 and 102, thereby ensuring that a bright image can be projected. Still furthermore, in the polarized light illumination apparatus 1, because the polarized light separating film is formed using a dielectric multilayer film which is thermally stable, the polarized light separating optical element 201 has thermally stable polarized light separation performance. As a result, when the polarized light illumination apparatus 1 is used in the projection type display device 5 which requires a high optical output, stable polarized light separation performance can be achieved.

Furthermore, even though two light sources 101 and 102 are used, the illumination light rays emitted from the two light sources 101 and 102 can be synthesized into a single light ray without causing an increase in the incident angle (illumination angle) of the illumination light ray to the illumination area. This means that the illumination light ray has the same cross section as obtained using only one light source. Thus, the amount of light per unit area can be increased to a level approximately twice greater than can be obtained with a single light source. This makes it possible to project an image with greater brightness.

Furthermore, in the polarized light illumination apparatus 1, the two types of polarized light rays emerging from the polarized light separating optical element 201 are separated in the horizontal direction to fit the illumination areas or the displaying areas longer in the horizontal direction than in the vertical direction of the liquid crystal light valves so that the illumination areas having rectangular shapes longer in the horizontal direction than in the vertical direction are illuminated in a highly efficient fashion without wasting light. Thus, the polarized light illumination apparatus 1 is suitable to be coupled with a liquid crystal light valve with a shape longer in the horizontal direction than in the vertical direction to project a beautiful image with outstanding quality.

Furthermore, in the present embodiment, the cross dichroic prism 713 employed as the colored light synthesizing optical element allows a size reduction and also reductions in the optical paths between the projection lens 714 and the respective liquid crystal light valves 703, 705, and 711. This makes it possible to obtain a bright projected image using a projection lens with a rather small diameter. Of the three optical paths associated with the respective colored light rays, one optical path is different in length from the other two optical paths. In the present embodiment, in the optical path for the blue light ray having the greatest length, there is provided the light guiding means 750 realized with the relay lens system including the incident lens 706, the relay lens 708, and the emerging lens 710 so as to prevent problems such as a color variation.

Furthermore, in the present embodiment, the reflecting mirror 501 serving as the optical path changing optical element is disposed between the condensing lens unit 401 serving as the polarization converting optical element and the blue/green light reflecting dichroic mirror 701 whereby the travelling direction of the polarized light ray emerging from the polarization converting optical element is changed. This allows the plane in which the colored light separating optical element, the colored light synthesizing optical element, the optical modulator, and the projection optical system are located and the plane in which the polarized light illumination apparatus 1 including two light sources having rather large sizes is located to be parallel to each other. Thus, it becomes possible to realize a thin projection display device having a small size in one direction.

In the polarized light illumination apparatus 1 disposed in the projection type display device 5 according to the present embodiment, one of the first and second light sources 101 and 102 may be formed to be removable. This allows a user to easily carry the projection type display device 5 after removing one of the light sources.

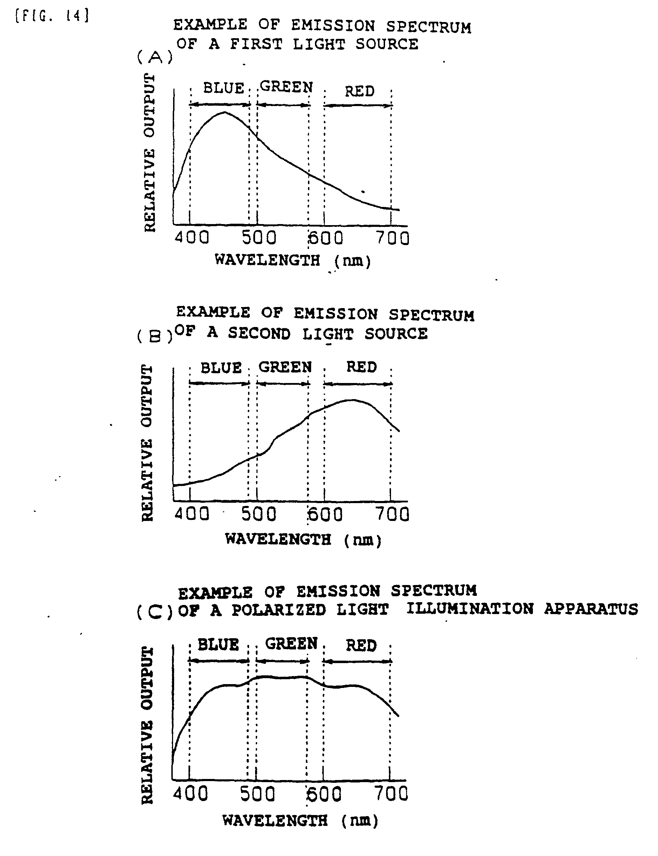

In the polarized light illumination apparatus 1 in the projection type display device 5 of the present embodiment, two types of light source lamps different in emission spectrum or brightness characteristics are used in the respective light sources 101 and 102, and these light source lamps can be selectively turned on. This brings about the following features and advantages.
1) By combining two types of light source lamps having a different emission spectrum, it becomes possible to realize an ideal illumination apparatus or an illumination apparatus ideal for use in a projection type display device. More specifically, light source lamps used in projection type display devices are required to provide a large optical output over the entire wavelength range including wavelengths of blue, green, and red. Furthermore, the optical output is required to be well balanced among blue, green, and red. However, at present, such an ideal light source lamp is not available. Fig. 14 illustrates the spectra of light emitted from light source lamps and a polarized illumination apparatus. For example, a lamp (such as a high-pressure mercury lamp) having a relatively high luminous efficiency but having a relatively low intensity at a wavelength corresponding to red as shown in Fig. 14(A) is widely used. Another widely used lamp (such as a certain type of metal halide lamp) has, as shown in Fig. 14(B), a relatively high luminous intensity for red but has a relatively low luminous efficiency for blue. If two types of light source lamps having emission spectra shown in Figs. 14(A) and 14(B), respectively, are employed in the polarized light illumination apparatus 1 of the projection type display device 5 and if both lamps are turned on during the operation, then the resultant light ray emitted from the polarized light illumination apparatus 1 has an ideal spectrum as shown in Fig. 14(C). This makes it possible to easily realize a projection type display device capable of projecting a high-quality image with a high brightness.
2) By selectively turning on the two types of light source lamps having different emission spectra, the color tone of the projected image can be changed in accordance with preferences of a user.
3) By selectively turning on the two light source lamps, it is possible to change the brightness of the projected image depending on the environment in which the projection type display device is used or depending on preferences of the user. More specifically, when the projection type display device is used in a light environment, both light sources may be turned on, whereas only one of the light sources may be turned on when it is used in a dark environment.
4) If the two light source lamps are alternately used, the life of each light source lamp becomes longer. Furthermore, when one of the light source lamps becomes unusable because of a failure or expiration of life, it is possible to continue to form a projected image using the remaining light source lamp. Thus, operability is improved. Furthermore, when the projection type display device is driven by a battery, only one of the light sources may be selectively used thereby making it possible to increase the battery life.

Although the polarized light illumination apparatus 1 is employed, by way of example, in the present embodiment, any of the polarized light illumination apparatus 2 to 4 may also be employed.

### [Seventh Embodiment]

The polarized light illumination apparatus according to the present invention may also be used in a projection type display device using a reflective liquid crystal light valve as an optical modulator.

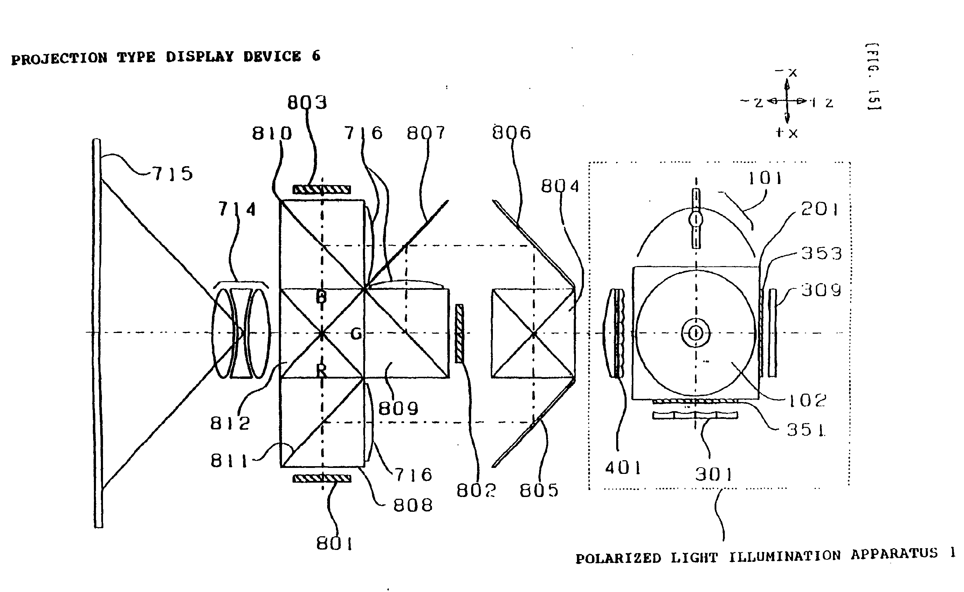

Fig. 15 illustrates a projection type display device 6 (in cross section taken along the xz plane) in which a polarized light illumination apparatus 1' which is a modification of the polarized light illumination apparatus 1 described in the first embodiment is employed. In the polarized light illumination apparatus 1 according to the first embodiment, the retardation layer 422 of the half-wave plate 421 is formed at locations corresponding to the secondary light source images C1(refer to Fig. 7), and the polarized light illumination apparatus 1 includes the reflecting mirror 501. However, in the polarized light illumination apparatus 1 of the present embodiment, the retardation layer 422 is formed at locations corresponding to the secondary light source images C2 (refer to Fig. 7), and the reflecting mirror 501 is removed. The randomly polarized light rays emitted from the first and second light sources 101 and 102 are respectively separated by the polarized light separating optical element 201 into two different types of polarized light rays. Of the separated polarized light rays, x-polarized light rays are converted by the half-wave plate(not shown) of the condensing lens unit (not shown) to a z-polarized light ray with which reflective liquid crystal light valves 801, 802, and 803 disposed at three different locations are illuminated.

The light ray emitted from the polarized light illumination apparatus 1 is first separated into a red light ray and blue/green light rays via a colored light separation cross dichroic prism 804 (colored light separation optical element) including a blue/green light reflecting dielectric multilayer film and a red light reflecting dielectric multilayer film which are disposed in a cross form. The red light ray is incident on a first polarized beam splitter via a reflecting mirror 805 and a collimator lens 716. On the other hand, the blue/green light rays are reflected by a reflecting mirror 806 and then separated into a green light ray (reflected light ray) and a blue light ray (transmitted light ray) by a green light reflecting dichroic mirror 807 (colored light separation optical element). The respective colored light rays are incident on second and third polarized beam splitters 809 and 810, respectively, via a collimator lens 716. The polarized beam splitters 808, 809, and 810 (polarized light separating optical elements) disposed at three different locations each include a polarized light separation plane 811 which transmits a P-polarized component and reflects an S-polarized component of incident light thereby separating the incident light into P- and S-polarized light rays. In Fig. 15, almost all the light rays emitted from the polarized light illumination apparatus 1 is polarized in the y direction which corresponds to the S-polarized direction. On the other hand, the P-polarized light corresponds to the x-polarized or z-polarized light ray.

Because almost all the light rays emitted from the polarized light illumination apparatus 1 is S-polarized, almost all colored light rays incident on the first to third polarized light beam splitters 808, 809, and 810 are reflected by the polarized light separating plane 811 and the travelling directions thereof are changed by substantially 90°. The resultant light rays are then incident on adjacent first to third reflective liquid crystal light valves 801, 802, and 803, respectively. However, there is a possibility that the colored light rays incident on the first to third polarized beam splitters 808, 809, and 810 include a small amount of light polarized in a direction (for example P-polarized direction) other than the S-polarized direction. Such a light ray polarized in a different direction passes through the polarized light separating plane 811 and emerges from the polarized beam splitters without being changed in the travelling direction. Thus, such a light ray does not contribute to illuminating the reflective liquid crystal light valves. The collimator lenses 716 disposed on the incident sides of the respective polarized beam splitters work in a similar manner as the collimator lenses 716 employed in the projection type display device 5 according to the sixth embodiment. Therefore, these collimator lenses 716 may be disposed between the polarized beam splitters and the corresponding reflective liquid crystal light valves. However, the collimator lenses 716 may be removed, if desired.

The light rays (S-polarized light rays) incident on the reflective liquid crystal light valves are modulated by the respective liquid crystal light valves in accordance with image information supplied from the outside. More specifically, when the light rays are passed through the reflective liquid crystal light valves, the polarization directions of the respective light rays are changed in accordance with image information and the travelling directions thereof are substantially reversed. The light rays emerging from the reflective liquid crystal light valves are again incident on the polarized beam splitter. At this time, because the light rays emerging from the respective liquid crystal light valves are partially P-polarized depending on the image information, only P-polarized components are passed through the polarized beam splitters depending on the polarization selectivity of the polarized beam splitters (thus an image corresponding to the image information is formed). The transmitted light rays are directed to the color light synthesizing cross dichroic prism 812. The colored light rays incident on the colored light synthesizing cross dichroic prism 812 (colored light combining optical element) are combined into a single optical image and projected onto a screen 715 via a projection lens 714 (projection optical system) thereby forming a color image thereon.

Also in this projection type display device 6 using reflective liquid crystal light valves, the reflective liquid crystal light valves modulate only one type of polarized light ray. Therefore, if the reflective liquid crystal light valves are illuminated with randomly polarized light emitted from a conventional illumination apparatus, then one-half or a greater part (typically 60%) of the randomly polarized light will be absorbed by the polarizers and converted to heat. Thus, the efficiency in use of light is low and a large-size cooling system, which often generates large noise, is required to remove the heat from the polarizers. Such problems are solved in the projection type display device 6 of the present embodiment.

More specifically, in the projection type display device 6 of the present embodiment, the light ray emitted from the polarized light illumination apparatus 1 is aligned in terms of polarization in the same single direction by rotating the polarization axis of only a component polarized in a particular direction (for example in the x direction) via a half-wave plate thereby converting the state of polarization of that component into the same state of polarization as that of the remaining component (polarized for example in the z direction) whereby the first to third liquid crystal light valves 801, 802, and 803 are all illuminated with the light ray polarized in the same single direction. As a result, the efficiency in use of light is improved and a bright image can be projected. Furthermore, because the absorption of light by the polarizers decreases, the temperature increase of the polarizers is suppressed. This allows a small-sized cooling system which generates low noise to be employed. Furthermore, using two light sources including the first and second light sources 101 and 102, a light ray whose polarization is aligned into the same single direction is emitted without causing a loss for any light ray emitted from the first and second light sources 101 and 102, thereby ensuring that a bright image can be projected. Still furthermore, in the polarized light illumination apparatus 1, because the polarized light separating film is formed using a dielectric multilayer film which is thermally stable, the polarized light separating optical element 201 has thermally stable polarized light separation performance. As a result, when the polarized light illumination apparatus 1 is used in the projection type display device 6 which requires a high optical output, stable polarized light separation performance can be achieved.

Furthermore, even though two light sources 101 and 102 are used, the illumination light rays emitted from the two light sources 101 and 102 can be combined into a single light ray without causing an increase in the incident angle (illumination angle) of the illumination light ray to the illumination area. This means that the illumination light ray has the same cross section as obtained using only one light source. Thus, the amount of light per unit area can be increased to a level approximately twice greater than can be obtained with a single light source. This makes it possible to project an image with greater brightness.

Also in the projection type display device 6 of the present embodiment, one of the first and second light sources 101 and 102 may be formed to be removable. Furthermore, two types of light source lamps having different emission spectra or different brightness characteristics may be employed in the first and second light sources 101 and 102. The two light source lamps may be selectively turned on thereby achieving similar advantages as described above.

Polarizers may be disposed on the incident sides of the respective polarized beam splitters 808, 809, and 810, and on the emerging sides of the respective polarized beam splitters 808, 809, and 810 or on the emerging side of the colored light synthesizing cross dichroic prism thereby increasing the contrast of the displayed image.

In the art of projection type display devices using a reflective light valve as is the case with the present embodiment, it is known to realize a color separating and synthesizing optical system using a combination of one polarized beam splitter and one color separating and synthesizing prism. In this case, the polarized light ray emitted from the polarized light illumination apparatus is directed to the color separating and synthesizing prism via the polarized beam splitter and the color separating and synthesizing prism separates the received polarized light ray into different color light rays, which are supplied to the reflective light valves. The reflective light valves modulate the respective light rays. The resultant light rays are again incident on the color separating and synthesizing prism to combine the light rays into a single light ray which is then projected via the polarized beam splitter.

Of course, any of the polarized light illumination apparatus 2 to 4 may also be employed instead of the polarized light illumination apparatus 1.

### [Other Embodiments]

In the case of a projection type display device using transmissive liquid crystal light valves, a colored light synthesizing optical element formed of two dichroic mirrors, that is, a so-called mirror optical system, may also be employed instead of the cross dichroic prism 713 employed in the projection type display device 5 according to the sixth embodiment. In this case, the polarized light illumination apparatus according to the present invention is also applicable. In the case where the mirror optical system is employed, it is possible to construct the projection type display device such that the optical paths between the polarized light illumination apparatus and the respective liquid crystal light valves disposed at three different locations are equal to one another. This makes it possible to provide illumination with small variations in brightness and color tone without having to use the light guiding means 750 such as that employed in the first embodiment.

In the first to sixth embodiments described above, the condensing lens unit 401 converts the z-polarized light ray to an x-polarized light ray thereby obtaining an illumination light ray polarized in the x direction. Instead, as described in the seventh embodiment, the x-polarized light ray may be converted to a z-polarized light ray thereby obtaining an illumination light ray polarized in the z direction. In this case, the retardation layer 422 of the half-wave plate 421 is disposed at locations where the secondary light source images of the x-polarized light rays are formed. The alignment of polarization may also be accomplished by rotating the polarization for both z- and x-polarized light rays. In this case, the retardation layer is disposed at locations where the secondary light source images of both z- and x-polarized light rays are formed.

In the embodiments described above, the half-wave plate and the quarter-wave plate are assumed to be formed of a widely used high-polymer film. Alternatively, these retardation plates may be formed of a twisted nematic (TN) liquid crystal. In the case where a TN liquid crystal is employed to form the retardation plates, it is possible to reduce dependence upon wavelength. As a result, the half-wave plate and the quarter-wave plates have higher polarization conversion performance than can be obtained using a widely used high-polymer film. The polarized light illumination apparatus disclosed above with reference to specific embodiments are particularly useful when it is used in a projection type display device including a light valve such as a liquid crystal light valve which works on a light ray polarized in a particular direction. However, when it is applied to a projection type display device including a light valve such as DMD (trademark of Texas Instruments Inc., USA) whose operation is not based on particular polarization of light, the polarized light illumination apparatus according to the present invention can also provide similar features and advantages as described above.

## Claims

1. A polarized light illumination apparatus comprising:
a polarized light separating optical element (201) including a first polarized light separating film (211) for separating light incident from a first direction into two types of polarized light, transmitting one of the two types of polarized light and directing it in a third direction, and reflecting the other one of the two types of polarized light and directing it in a fourth direction, and also including a second polarized light separating film (212) for separating light incident from a second direction into two types of polarized light, reflecting one of the two types of polarized light and directing it in said fourth direction, and transmitting the other one of the two types of polarized light and directing it in a fifth direction;
a first light source (101) for emitting the light incident on said polarized light separating optical element from said first direction;
a second light source (102) for emitting the light incident on said polarized light separating optical element from said second direction;
a first condensing and reflecting optical element (301) including a plurality of condensing and reflecting elements for forming a plurality of condensed light images from the light emerging in said third direction from said polarized light separating optical element (201);
a second condensing and reflecting optical element (302) including a plurality of condensing and reflecting elements for forming a plurality of condensed light images from the light emerging in said fifth direction from said polarized light separating optical element (201);
a reflecting optical element (309) for reflecting the light emerging in said fourth direction from said polarized light separating optical element (201);
a first polarization state converting optical element (351) disposed between said polarized light separating optical element (201) and said first condensing and reflecting optical element (301);
a second polarization state converting optical element (352) disposed between said polarized light separating optical element (201) and said second condensing and reflecting optical element (302);
a third polarization state converting optical element (353) disposed between said polarized light separating optical element (201) and said reflecting optical element (309); and
a polarization converting optical element (421) for making uniform the direction of polarization of the light emerging from said polarized light separating optical element in a sixth direction; **characterised in that**
a first center axis being defined as the center axis of the light which is incident on said polarization converting optical element (421) after being reflected by said condensing and reflecting elements of said first condensing and reflecting optical element (301) and a second center axis being defined as the center axis of the light which is incident on said polarization converting optical element after being reflected by said condensing and reflecting elements of said second condensing and reflecting optical element (302) do not overlap each other;
said first condensing and reflecting optical element (301) is arranged to substantially reverse the traveling direction of the light emerging in said third direction from said polarized light separating optical element (201);
said second condensing and reflecting optical element (302) is arranged to substantially reverse the traveling direction of the light emerging in said fifth direction from said polarized light separating optical element (201);
said reflecting optical element (309) is arranged to substantially reverse the traveling direction of the light emerging in said fourth direction from said polarized light separating optical element (201); and
the first center axis and said second center axis are substantially parallel to each other.

2. A polarized light illumination apparatus according to Claim 1, wherein said reflecting optical element is disposed such that the polarized light emitted from said first light source and then reflected by said first polarized light separating film and the polarized light emitted from said second light source and then reflected by said second polarized light separating film are incident on said second and first light sources, respectively, which are opposite to the light sources from which said polarized light is emitted.

3. A polarized light illumination apparatus according to Claim 1 or 2, wherein the shape of the opening of each condensing and reflecting element is geometrically similar to the shape of an area to be illuminated.

4. A polarized light illumination apparatus according to one of Claims 1 to 3, wherein a condensing optical element including a plurality of condensing elements for condensing the light emerging from said polarized light separating optical element is disposed on the incident side or emerging side of said polarization converting optical element.

5. A polarized light illumination apparatus according to one of Claims 1 to 4, wherein a superimposing optical element for superimposing the light emerging from said polarization converting optical element upon an area to be illuminated is disposed on the emerging side of said polarization converting optical element.

6. A polarized light illumination apparatus according to one of Claims 1 to 5, wherein an optical path changing optical element for changing the optical path of the light emerging from said polarization converting optical element is disposed on the emerging side of said polarization converting optical element.

7. A polarized light illumination apparatus according to one of Claims 1 to 6, wherein said condensing and reflecting elements of said first and second condensing and reflecting optical elements each include a curved surface reflecting mirror.

8. A polarized light illumination apparatus according to one of Claims 1 to 6, wherein said condensing and reflecting elements of said first and second condensing and reflecting optical elements each include a lens and a reflecting surface formed on a surface of said lens opposite to said polarized light separating optical element.

9. A projection type display apparatus comprising:
a polarized light illumination apparatus according to one of Claims 1 to 8;
an optical modulator for modulating light emitted from said polarized light illumination apparatus; and
a projecting optical system for projecting the light modulated by said optical modulator.

10. A projection type display apparatus comprising:
a polarized light illumination apparatus according to one of Claims 1 to 8;
a colored light separating optical element for separating light emitted from said polarized light illumination apparatus into a plurality of colored lights;
a plurality of optical modulators for modulating the respective colored light separated by said colored light separating optical element;
a colored light synthesizing optical element for synthesizing the light modulated by said plurality of optical modulators; and
a projecting optical system for projecting the light synthesized by said colored light synthesizing optical element.

11. A projection type display apparatus comprising:
a polarized light illumination apparatus according to one of Claims 1 to 8;
a reflective optical modulator for modulating light emitted from said polarized light illumination apparatus;
a polarized light separating optical element for separating a plurality of polarized light components, contained in the light emitted from said polarized light illumination apparatus and in the light modulated by said reflective optical modulator, from one another; and
a projecting optical system for projecting the light modulated by said reflective optical modulator and then emitted via said polarized light separating optical element.

12. A projection type display apparatus comprising:
a polarized light illumination apparatus according to one of Claims 1 to 8;
a plurality of reflective optical modulators for modulating light emitted from said polarized light illumination apparatus;
a polarized light separating optical element for separating a plurality of polarized light components, contained in the light emitted from said polarized light illumination apparatus and in the light modulated by said plurality of reflective optical modulators, from one another;
a colored light separating and combining optical element disposed between said polarized light separating optical element and said plurality of reflective optical modulators, for separating the light emitted from said polarized light illumination apparatus into a plurality of colored lights and for combining the colored light emitted from said plurality of reflective optical modulators; and
a projecting optical system for projecting the light modulated by said plurality of reflective optical modulators and then emitted via said colored light separating and combining optical element and said polarized light separating optical element.

13. A projection type display apparatus comprising: a polarized light illumination apparatus according to one of Claims 1 to 8;
a colored light separating optical element for separating light emitted from said polarized light illumination apparatus into a plurality of colored lights;
a plurality of reflective optical modulators for modulating the respective colored light separated by said colored light separating optical element;
a plurality of polarized light separating optical elements for separating a plurality of polarized light components, contained in the colored light separated by said colored light separating optical element and in the colored light modulated by said plurality of reflective optical modulators, from one another;
a colored light synthesizing optical element for synthesizing the light modulated by said plurality of reflective optical modulators and then emitted via said plurality of polarized light separating optical elements; and
a projecting optical system for projecting the light synthesized by said colored light synthesizing optical element.

14. A projection type display apparatus according to one of Claims 10 to 13, wherein at least one of the first and second light sources is constructed to be removable.

15. A projection type display apparatus according to one of Claims 10 to 13, wherein at least one of the first and second light sources is capable of being selectively turned on.

## Patentansprüche

1. Beleuchtungsvorrichtung mit polarisiertem Licht, umfassend:
ein optisches Trennelement (201) für polarisiertes Licht mit einem ersten Trennfilm (211) für polarisiertes Licht zum Trennen von Licht, das von einer ersten Richtung einfällt, in zwei Arten von polarisiertem Licht, Durchlassen einer der zwei Arten von polarisiertem Licht, und Leiten desselben in eine dritte Richtung, und Reflektieren der anderen der zwei Arten von polarisiertem Licht und Leiten desselben in eine vierte Richtung, und ebenso enthaltend einen zweiten Trennfilm (212) für polarisiertes Licht zum Trennen von Licht, das von einer zweiten Richtung einfällt, in zwei Arten von polarisiertem Licht, Reflektieren einer der zwei Arten von polarisiertem Licht und Leiten desselben in eine vierte Richtung, und Durchlassen der anderen der zwei Arten von polarisiertem Licht und Leiten desselben in eine fünfte Richtung;
eine erste Lichtquelle (101) zum Ausstrahlen des Lichts, das auf das optische Trennelement für polarisiertes Licht aus der ersten Richtung fällt;
eine zweite Lichtquelle (102) zum Ausstrahlen des Lichts, das auf das optische Trennelement für polarisiertes Licht aus der zweiten Richtung fällt;
ein erstes optisches Kondensor- und Reflexionselement (301) mit einer Vielzahl von Kondensor- und Reflexionselementen zur Bildung einer Vielzahl kondensierter Lichtbilder von dem Licht, das in der dritten Richtung aus dem optischen Trennelement (201) für polarisiertes Licht austritt;
ein zweites optisches Kondensor- und Reflexionselement (302) mit einer Vielzahl von Kondensor- und Reflexionselementen zur Bildung einer Vielzahl kondensierter Lichtbilder von dem Licht, das in der fünften Richtung aus dem optischen Trennelement (201) für polarisiertes Licht austritt;
ein optisches Reflexionselement (309), zum Reflektieren des Lichts, das in der vierten Richtung aus dem optischen Trennelement (201) für polarisiertes Licht austritt;
ein erstes optisches Element (351) zum Umwandeln des Polarisationszustandes, das zwischen dem optischen Trennelement (201) für polarisiertes Licht und dem ersten optischen Kondensor- und Reflexionselement (301) angeordnet ist,
ein zweites optisches Element (352) zum Umwandeln des Polarisationszustandes, das zwischen dem optischen Trennelement (201) für polarisiertes Licht und dem zweiten optischen Kondensor- und Reflexionselement (302) angeordnet ist,
ein drittes optisches Element (353) zum Umwandeln des Polarisationszustandes, das zwischen dem optischen Trennelement (201) für polarisiertes Licht und dem optischen Reflexionselement (309) angeordnet ist, und
ein optisches Element (421) zum Umwandeln der Polarisation, um die Polarisationsrichtung des Lichts, das in einer sechsten Richtung aus dem optischen Trennelement (201) für polarisiertes Licht austritt, gleichförmig zu machen; **dadurch gekennzeichnet, dass**
eine erste Mittelachse, die als Mittelachse des Lichts definiert ist, das auf das optische Element (421) zum Umwandeln der Polarisation fällt, nachdem es von den Kondensor- und Reflexionselementen des ersten optischen Kondensor- und Reflexionselements (301) reflektiert wird, und eine zweite Mittelachse, die als Mittelachse des Lichts definiert ist, das auf das optische Element zum Umwandeln der Polarisation fällt, nachdem es von den Kondensor- und Reflexionselementen des zweiten optischen Kondensor- und Reflexionselements (302) reflektiert wird, einander nicht überlappen,
das erste optische Kondensor- und Reflexionselement (301) so angeordnet ist, dass es im Wesentlichen die Bewegungsrichtung des Lichts umkehrt, das in der dritten Richtung aus dem optischen Trennelement (201) für polarisiertes Licht austritt;
das zweite optische Kondensor- und Reflexionselement (302) so angeordnet ist, dass es im Wesentlichen die Bewegungsrichtung des Lichts umkehrt, das in der fünften Richtung aus dem optischen Trennelement (201) für polarisiertes Licht austritt;
das optische Reflexionselement (309) so angeordnet ist, dass es im Wesentlichen die Bewegungsrichtung des Lichts umkehrt, das in der vierten Richtung aus dem optischen Trennelement (201) für polarisiertes Licht austritt; und
die erste Mittelachse und die zweite Mittelachse im Wesentlichen parallel zueinander sind.

2. Beleuchtungsvorrichtung mit polarisiertem Licht nach Anspruch 1, wobei das optische Reflexionselement so angeordnet ist, dass das polarisierte Licht, das von der ersten Lichtquelle ausgestrahlt und dann von dem ersten Trennfilm für polarisiertes Licht reflektiert wird, und das polarisierte Licht, das von der zweiten Lichtquelle ausgestrahlt und dann von dem zweiten Trennfilm für polarisiertes Licht reflektiert wird, auf die zweite beziehungsweise erste Lichtquelle fällt, die den Lichtquellen gegenüberliegen, von welchen das polarisierte Licht ausgestrahlt wird.

3. Beleuchtungsvorrichtung mit polarisiertem Licht nach Anspruch 1 oder 2, wobei die Form der Öffnung jedes Kondensor- und Reflexionselements geometrisch der Form einer zu beleuchtenden Fläche ähnlich ist.

4. Beleuchtungsvorrichtung mit polarisiertem Licht nach einem der Ansprüche 1 bis 3, wobei ein optisches Kondensorelement, das eine Vielzahl von Kondensorelementen zum Konzentrieren des Lichts enthält, das aus dem optischen Trennelement für polarisiertes Licht austritt, an der Einfallsseite oder Austrittsseite des optischen Elements zum Umwandeln der Polarisation angeordnet ist.

5. Beleuchtungsvorrichtung mit polarisiertem Licht nach einem der Ansprüche 1 bis 4, wobei ein überlagerndes optisches Element zum Überlagern des Lichts, das aus dem optischen Element zum Umwandeln der Polarisation auf eine zu beleuchtende Fläche austritt, an der Austrittsseite des optischen Elements zum Umwandeln der Polarisation angeordnet ist.

6. Beleuchtungsvorrichtung mit polarisiertem Licht nach einem der Ansprüche 1 bis 5, wobei ein optisches Element zum Ändern des Lichtwegs, das den Lichtweg des Lichts ändert, das aus dem optischen Element zum Umwandeln der Polarisation austritt, an der Austrittsseite des optischen Elements zum Umwandeln der Polarisation angeordnet ist.

7. Beleuchtungsvorrichtung mit polarisiertem Licht nach einem der Ansprüche 1 bis 6, wobei die Kondensor- und Reflexionselemente des ersten und zweiten optischen Kondensor- und Reflexionselements jeweils einen Reflexionsspiegel mit gekrümmter Oberfläche enthalten.

8. Beleuchtungsvorrichtung mit polarisiertem Licht nach einem der Ansprüche 1 bis 6, wobei die Kondensor- und Reflexionselemente des ersten und zweiten optischen Kondensor- und Reflexionselements jeweils eine Linse und eine Reflexionsfläche enthalten, die auf einer Oberfläche der Linse gebildet ist, die dem optischen Trennelement für polarisiertes Licht gegenüberliegt.

9. Anzeigevorrichtung vom Projektionstyp, umfassend:
eine Beleuchtungsvorrichtung mit polarisiertem Licht nach einem der Ansprüche 1 bis 8;
einen optischen Modulator zum Modulieren von Licht, das von der Beleuchtungsvorrichtung mit polarisiertem Licht ausgestrahlt wird; und
ein optisches Projektionssystem zum Projizieren des Lichts, das von dem optischen Modulator moduliert wird.

10. Anzeigevorrichtung vom Projektionstyp, umfassend:
eine Beleuchtungsvorrichtung mit polarisiertem Licht nach einem der Ansprüche 1 bis 8;
ein optisches Element zum Trennen von farbigem Licht, zum Trennen von Licht, das von der Beleuchtungsvorrichtung mit polarisiertem Licht ausgestrahlt wird, in eine Vielzahl von farbigen Lichtstrahlen;
eine Vielzahl von optischen Modulatoren zum Modulieren des entsprechenden farbigen Lichts, das durch das optische Element zum Trennen von farbigem Licht getrennt wird;
ein optisches Element zum Synthetisieren von farbigem Licht, zum Synthetisieren des Lichts, das durch die Vielzahl von optischen Modulatoren moduliert wird, und
ein optisches Projektionssystem zum Projizieren des Lichts, das von dem optischen Element zum Synthetisieren von farbigem Licht synthetisiert wird.

11. Anzeigevorrichtung vom Projektionstyp, umfassend:
eine Beleuchtungsvorrichtung mit polarisiertem Licht nach einem der Ansprüche 1 bis 8;
einen reflektierenden optischen Modulator, zum Modulieren von Licht, das von der Beleuchtungsvorrichtung mit polarisiertem Licht ausgestrahlt wird;
ein optisches Trennelement für polarisiertes Licht zum Trennen einer Vielzahl polarisierter Lichtkomponenten, die in dem Licht enthalten sind, das von der Beleuchtungsvorrichtung mit polarisiertem Licht ausgestrahlt wird, sowie in dem Licht, das von dem reflektierenden optischen Modulator moduliert wird; und
ein optisches Projektionssystem zum Projizieren des Lichts, das von dem reflektierenden optischen Modulator moduliert wird und dann über das optische Trennelement für polarisiertes Licht ausgestrahlt wird.

12. Anzeigevorrichtung vom Projektionstyp, umfassend:
eine Beleuchtungsvorrichtung mit polarisiertem Licht nach einem der Ansprüche 1 bis 8;
eine Vielzahl von reflektierenden optischen Modulatoren, zum Modulieren von Licht, das von der Beleuchtungsvorrichtung mit polarisiertem Licht ausgestrahlt wird;
ein optisches Trennelement für polarisiertes Licht zum Trennen einer Vielzahl polarisierter Lichtkomponenten, die in dem Licht enthalten sind, das von der Beleuchtungsvorrichtung mit polarisiertem Licht ausgestrahlt wird, sowie in dem Licht, das von der Vielzahl von reflektierenden optischen Modulatoren moduliert wird;
ein optisches Trenn- und Kombinationselement für farbiges Licht, das zwischen dem optischen Trennelement für polarisiertes Licht und der Vielzahl von reflektierenden optischen Modulatoren angeordnet ist, zum Trennen des Lichts, das von der Beleuchtungsvorrichtung mit polarisiertem Licht ausgestrahlt wird, in eine Vielzahl von farbigen Lichtstrahlen und zum Kombinieren des farbigen Lichts, das von der Vielzahl von reflektierenden optischen Modulatoren ausgestrahlt wird; und
ein optisches Projektionssystem zum Projizieren des Lichts, das von der Vielzahl von reflektierenden optischen Modulatoren moduliert und dann über das optische Trenn- und Kombinationselement für farbiges Licht und das optische Trennelement für polarisiertes Licht ausgestrahlt wird.

13. Anzeigevorrichtung vom Projektionstyp, umfassend: eine Beleuchtungsvorrichtung mit polarisiertem Licht nach einem der Ansprüche 1 bis 8;
ein optisches Trennelement für farbiges Licht zum Trennen des Lichts, das von der Beleuchtungsvorrichtung mit polarisiertem Licht ausgestrahlt wird, in eine Vielzahl farbiger Lichtstrahlen;
eine Vielzahl von reflektierenden optischen Modulatoren, zum Modulieren des entsprechenden farbigen Lichts, das von dem optischen Trennelement für farbiges Licht getrennt wird;
eine Vielzahl optischer Trennelemente für polarisiertes Licht zum Trennen einer Vielzahl polarisierter Lichtkomponenten, die in dem farbigen Licht enthalten sind, das von dem optischen Trennelement für farbiges Licht getrennt wird, sowie in dem farbigen Licht, das von der Vielzahl von reflektierenden optischen Modulatoren moduliert wird;
ein optisches Element zum Synthetisieren von farbigem Licht, zum Synthetisieren des Lichts, das von der Vielzahl von reflektierenden optischen Modulatoren moduliert und dann über die Vielzahl optischer Trennelemente für polarisiertes Licht ausgestrahlt wird; und
ein optisches Projektionssystem zum Projizieren des Lichts, das von dem optischen Element zum Synthetisieren von farbigem Licht synthetisiert wird.

14. Anzeigevorrichtung vom Projektionstyp nach einem der Ansprüche 10 bis 13, wobei zumindest eine von der ersten und zweiten Lichtquelle entfernbar konstruiert ist.

15. Anzeigevorrichtung vom Projektionstyp nach einem der Ansprüche 10 bis 13, wobei zumindest eine von der ersten und zweiten Lichtquelle imstande ist, selektiv eingeschalten zu werden.

## Revendications

1. Appareil d'éclairage à lumière polarisée, comprenant :
un élément optique de décomposition de la lumière polarisée (201) comprenant une première pellicule de décomposition de la lumière polarisée (211) pour décomposer une lumière incidente provenant d'une première direction en deux types de lumière polarisée, en transmettant l'un des deux types de lumière polarisée et en la dirigeant dans une troisième direction, et en réfléchissant l'autre des deux types de lumière polarisée et en la dirigeant dans une quatrième direction, et comprenant également une deuxième pellicule de décomposition de la lumière polarisée (212) pour décomposer une lumière incidente provenant d'une deuxième direction en deux types de lumière polarisée, en réfléchissant l'un des deux types de lumière polarisée et la dirigeant dans ladite quatrième direction, et en transmettant l'autre des deux types de lumière polarisée et en la dirigeant dans une cinquième direction ;
une première source lumineuse (101) pour émettre la lumière incidente avec ledit élément optique de décomposition de la lumière polarisée à partir de ladite première direction ;
une deuxième source lumineuse (102) pour émettre la lumière incidente avec ledit élément optique de décomposition de la lumière polarisée à partir de ladite deuxième direction ;
un premier élément optique de concentration et de réflexion (301) comprenant une pluralité d'éléments de concentration et de réflexion pour former une pluralité d'images à lumière concentrée à partir de la lumière qui émerge dans ladite troisième direction à partir dudit élément optique de décomposition de la lumière polarisée (201) ;
un deuxième élément optique de concentration et de réflexion (302) comprenant une pluralité d'éléments de concentration et de réflexion pour former une pluralité d'images à lumière concentrée à partir de la lumière qui émerge dans ladite cinquième direction à partir dudit élément optique de décomposition de la lumière polarisée (201);
un élément optique de réflexion (309) pour réfléchir la lumière qui émerge dans ladite quatrième direction à partir dudit élément optique de décomposition de la lumière polarisée (201) ;
un premier élément optique de conversion de l'état de polarisation (351) disposé entre ledit élément optique de décomposition de la lumière polarisée (201) et ledit premier élément optique de concentration et de réflexion (301) ;
un deuxième élément optique de conversion de l'état de polarisation (352) disposé entre ledit élément optique de décomposition de la lumière polarisée (201) et ledit deuxième élément optique de concentration et de réflexion (302) ;
un troisième élément optique de conversion de l'état de polarisation (353) disposé entre ledit élément optique de décomposition de la lumière polarisée (201) et ledit élément optique de réflexion (309) ; et
un élément optique de conversion de la polarisation (421) pour rendre uniforme la direction de polarisation de la lumière qui émerge à partir dudit élément optique de décomposition de la lumière polarisée dans une sixième direction ; **caractérisé en ce que**
un premier axe central qui est définit comme étant l'axe central de la lumière incidente sur ledit élément optique de conversion de la polarisation (421) après avoir été réfléchie par lesdits éléments de concentration et de réflexion dudit premier élément optique de concentration et de réflexion (301), et un deuxième axe central qui est définit en tant qu'axe central de la lumière incidente avec ledit élément optique de conversion de la polarisation après avoir été réfléchie par lesdits éléments de concentration et de réflexion dudit deuxième élément optique de concentration et de réflexion (302), ne se superposent pas ;
ledit premier élément optique de concentration et de réflexion (301) étant étudié pour essentiellement inverser la direction de propagation de la lumière qui émerge dans ladite troisième direction à partir dudit élément optique de décomposition de la lumière polarisée (201) ;
ledit deuxième élément optique de concentration et de réflexion (302) étant étudié pour essentiellement inverser la direction de propagation de la lumière qui émerge dans ladite cinquième direction à partir dudit élément optique de décomposition de la lumière polarisée (201) ;
ledit élément optique de réflexion (309) étant étudié pour essentiellement inverser la direction de propagation de la lumière qui émerge dans ladite quatrième direction à partir dudit élément optique de décomposition de la lumière polarisée (201) ; et
le premier axe central et ledit deuxième axe central étant essentiellement parallèles l'un par rapport à l'autre.

2. Appareil d'éclairage à lumière polarisée selon la revendication 1, où ledit élément optique de réflexion est placé de manière à ce que la lumière polarisée qui est émise à partir de ladite première source lumineuse et qui est ensuite réfléchie par ladite première pellicule de décomposition de la lumière polarisée, et la lumière polarisée qui est émise à partir de ladite deuxième source lumineuse et qui est ensuite réfléchie par ladite deuxième pellicule de décomposition de la lumière polarisée, sont incidentes respectivement avec ladite première et ladite deuxième source lumineuse, lesquelles sont en opposition aux sources lumineuses à partir desquelles ladite lumière polarisée est émise.

3. Appareil d'éclairage à lumière polarisée selon les revendications 1 ou 2, où la forme de l'ouverture de chacun des éléments de concentration et de réflexion est géométriquement similaire à la forme d'une superficie devant être éclairée.

4. Appareil d'éclairage à lumière polarisée selon l'une quelconque des revendications 1 à 3, où un élément optique de concentration comprenant une pluralité d'éléments de concentration pour concentrer de la lumière qui émerge à partir dudit élément optique de décomposition de la lumière polarisée, est disposé du côté d'incidence ou du côté d'émergence dudit élément optique de conversion de la polarisation.

5. Appareil d'éclairage à lumière polarisée selon l'une quelconque des revendications 1 à 4, où un élément optique de superposition pour superposer la lumière qui émerge à partir dudit élément optique de conversion de la polarisation sur une superficie à éclairer, est disposé du côté d'émergence dudit élément optique de conversion de la polarisation.

6. Appareil d'éclairage à lumière polarisée selon l'une quelconque des revendications 1 à 5, où un élément optique de modification du parcours optique, pour modifier le parcours optique le la lumière qui émerge à partir dudit élément optique de conversion de la polarisation, est disposé du côté d'émergence dudit élément optique de conversion de la polarisation.

7. Appareil d'éclairage à lumière polarisée selon l'une quelconque des revendications 1 à 6, où lesdits éléments de concentration et de réflexion desdits premier et deuxième éléments optiques de concentration et de réflexion, comprennent chacun un miroir réfléchissant à surface courbe.

8. Appareil d'éclairage à lumière polarisée selon l'une quelconque des revendications 1 à 6, où lesdits éléments de concentration et de réflexion desdits premier et deuxième éléments optiques de concentration et de réflexion, comprennent chacun une lentille et une surface de réflexion formée sur une surface de ladite lentille en opposition audit élément optique de décomposition de la lumière polarisée.

9. Appareil d'affichage de type à projection, comprenant :
un appareil d'éclairage à lumière polarisée selon l'une quelconque des revendications 1 à 8 ;
un modulateur optique pour moduler de la lumière émise à partir dudit appareil d'éclairage à lumière polarisée ; et
un système optique de projection pour projeter la lumière modulée par ledit modulateur optique.

10. Appareil d'affichage de type à projection comprenant :
un appareil d'éclairage à lumière polarisée selon l'une quelconque des revendications 1 à 8 ;
un élément optique de décomposition de la lumière colorée, pour décomposer une lumière émise à partir dudit appareil d'éclairage à lumière polarisée en une pluralité de lumières colorées ;
une pluralité de modulateurs optiques, pour moduler les lumières colorées respectives décomposées grâce audit élément optique de décomposition de la lumière colorée ;
un élément optique de synthétisation de la lumière colorée, pour synthétiser la lumière modulée par ladite pluralité de modulateurs optiques; et
un système optique de projection, pour projeter la lumière synthétisée par ledit élément optique de synthétisation de la lumière colorée.

11. Appareil d'affichage de type à projection, comprenant :
un appareil d'éclairage à lumière polarisée selon l'une quelconque des revendications 1 à 8 ;
un modulateur optique réfléchissant pour moduler une lumière émise à partir dudit appareil d'éclairage à lumière polarisée;
un élément optique de décomposition de la lumière polarisée pour décomposer, en les séparant les uns des autres, une pluralité de composants de lumière polarisée se trouvant dans la lumière émise à partir dudit appareil d'éclairage à lumière polarisée et dans la lumière modulée par ledit modulateur optique réfléchissant; et
un système optique de projection, pour projeter la lumière qui est modulée par ledit modulateur optique réfléchissant et qui est ensuite émise via ledit élément optique de décomposition de la lumière polarisée.

12. Appareil d'affichage de type à projection, comprenant :
un appareil d'éclairage à lumière polarisée selon l'une quelconque des revendications 1 à 8;
une pluralité de modulateurs optiques réfléchissants, pour moduler une lumière émise à partir dudit appareil d'éclairage à lumière polarisée;
un élément optique de décomposition de la lumière polarisée pour décomposer, en les séparant les uns des autres, une pluralité de composants de lumière polarisée se trouvant dans la lumière émise à partir dudit appareil d'éclairage à lumière polarisée et dans la lumière modulée par ladite pluralité de modulateurs optiques réfléchissants ;
un élément optique de décomposition et de combinaison de la lumière colorée, disposé entre ledit élément optique de décomposition de la lumière polarisée et ladite pluralité de modulateurs optiques réfléchissants, pour décomposer la lumière émise à partir dudit appareil d'éclairage à lumière polarisée en une pluralité de lumière colorées, et pour combiner la lumière colorée émise à partir de ladite pluralité de modulateurs optiques réfléchissants ; et
un système optique de projection, pour projeter la lumière qui est modulée par ladite pluralité de modulateurs optiques réfléchissants et qui est ensuite émise via ledit élément optique de décomposition et de combinaison de la lumière colorée et ledit élément optique de décomposition de la lumière polarisée.

13. Appareil d'affichage de type à projection comprenant :
un appareil d'éclairage à lumière polarisée selon l'une quelconque des revendications 1 à 8 ;
un élément optique de décomposition de la lumière colorée, pour décomposer une lumière émise à partir dudit appareil d'éclairage à lumière polarisée en une pluralité de lumières colorées ;
une pluralité de modulateurs optiques réfléchissants, pour moduler les lumières colorées respectives décomposées par ledit élément optique de décomposition de la lumière-colorée ;
une pluralité d'éléments optiques de décomposition de la lumière polarisée pour décomposer, en les séparant les uns des autres, une pluralité de composants de lumière polarisée se trouvant dans la lumière colorée décomposée par ledit élément optique de décomposition de la lumière colorée, et dans la lumière colorée modulée par ladite pluralité de modulateurs optiques réfléchissants ;
un élément optique de synthétisation de la lumière colorée, pour synthétiser la lumière qui est modulée par ladite pluralité de modulateurs optiques réfléchissants et qui est ensuite émise via ladite pluralité d'éléments optiques de décomposition de la lumière polarisée ; et
un système optique de projection, pour projeter la lumière synthétisée par ledit élément optique de synthétisation de la lumière colorée.

14. Appareil d'affichage de type à projection selon l'une quelconque des revendications 10 à 13, où au moins l'une parmi la première et la deuxième source lumineuse est réalisée de manière à être amovible.

15. Appareil d'affichage de type à projection selon l'une quelconque des revendications 10 à 13, où au moins l'une parmi la première et la deuxième source lumineuse peut être allumée de manière sélective.
